# EUROPÄISCHE PATENTANMELDUNG

(11) **EP 4 637 132 A1**
(43) Veröffentlichungstag der Anmeldung: **22.10.2025**
(21) Anmeldenummer: 24171163.9
(22) Anmeldetag: 18.04.2024
(51) Int. Cl.: H04N 7/14, G06V 10/82, G06V 40/16

(54) **VIDEOKONFERENZVERFAHREN UND VIDEOKONFERENZSYSTEM**

(71) Anmelder: CASABLANCA.AI GMBH, 75172 Pforzheim (DE)
(72) Erfinder: ALLES, Ivan, 75172 Pforzheim (DE); KRAUS, Carsten, 75173 Pforzheim (DE)
(74) Vertreter: Meissner Bolte Partnerschaft mbB

(57) **Zusammenfassung**

Die Erfindung betrifft ein Videokonferenzverfahren, bei dem von einer Verarbeitungseinheit (14) die von einer ersten Bildaufnahmevorrichtung (3) aufgenommenen Videobilddaten verarbeitet und an eine zweite Anzeigevorrichtung (8) übertragen werden. In den verarbeiteten Videobilddaten erscheint eine Ziel-Blickrichtung eines ersten Nutzers (5) dabei so, als wäre die erste Bildaufnahmevorrichtung (3) auf einer Geraden (18) angeordnet, die ein Auge des ersten Nutzers und durch ein von auf einer ersten Anzeigevorrichtung (4) dargestelltes Auge eines zweiten Nutzers (9) geht. Bei der Verarbeitung der Videobilddaten wird in einem Encoder (33) ein Quell-Latenzvektor eines Latenzraums gewonnen, der die Pose des Kopfes und/oder die Blickrichtung (16) repräsentiert. Aus dem Quell-Latenzvektor und einer Ziel-Blickrichtung und/oder Ziel-Pose des Kopfes wird ein Ziel-Latenzvektor des Latenzraums so berechnet wird, dass der Ziel-Latenzvektor die Ziel-Blickrichtung und/oder die Ziel-Pose des Kopfes repräsentiert. Dann wird in einem Decoder (34) eine Zwischendarstellung des Kopfes mittels eines Kopfmodells anhand des Ziel-Latenzvektors gewonnen und diese Zwischendarstellung von einer Warp-Einheit (43) in eine Ausgabedarstellung des Kopfes mittels des Quell-Latenzvektors, des Ziel-Latenzvektors und der Quell-Erscheinungsparameter umgewandelt.

## Beschreibung

Die vorliegende Erfindung betrifft ein Videokonferenzverfahren mit einer ersten und einer zweiten Videokonferenzeinrichtung. Bei jeder Videokonferenzeinrichtung werden Videobilder eines Nutzers aufgenommen, an die andere, entfernt angeordnete Videokonferenzeinrichtung übertragen und dort von einer Anzeigevorrichtung angezeigt. Ferner betrifft die Erfindung ein Videokonferenzsystem, das eine erste Videokonferenzeinrichtung mit einer ersten Anzeigevorrichtung und einer ersten Bildaufnahmevorrichtung sowie eine zweite Videokonferenzeinrichtung mit einer zweiten Anzeigevorrichtung und einer zweiten Bildaufnahmevorrichtung aufweist.

Bei einer Videokonferenz ergibt sich das Problem, dass sich kein direkter Blickkontakt zwischen den Nutzern ergibt. Hierin unterscheidet sich die Situation der Videokonferenz von einer Situation, bei der sich die beiden Nutzer direkt gegenübersitzen. Wenn nämlich der erste Nutzer die Darstellung des zweiten Nutzers auf seiner Anzeigevorrichtung betrachtet, blickt der erste Nutzer nicht in die Bildaufnahmevorrichtung, so dass bei der Darstellung des ersten Nutzers bei der Anzeigevorrichtung des zweiten Nutzers dieser erste Nutzer so dargestellt wird, dass er nicht in die Augen des zweiten Nutzers blickt. Wenn der erste Nutzer umgekehrt in die Bildaufnahmevorrichtung blickt, so dass sich bei der Darstellung des ersten Nutzers auf der Anzeigevorrichtung des zweiten Nutzers ein Blickkontakt zwischen den Nutzern ergibt, kann der erste Nutzer auf seiner Anzeigevorrichtung die Darstellung des zweiten Nutzers nur peripher erfassen.

Um einen Blickkontakt der Nutzer bei einer Videokonferenz zu ermöglichen, schlägt die EP 0 970 584 B1 vor, Kameras in Öffnungen des Bildschirms anzuordnen. Ferner wird vorgeschlagen, mit zwei Kameras jeweils Teilaufnahmen eines Raums aufzunehmen. Diese Teilaufnahmen werden in einer Videoverarbeitungseinheit aneinandergefügt, um auf einem Bildschirm aus den von beiden Kameras stammenden Signalen ein einziges Bild herzustellen.

In ähnlicher Weise beschreibt die US 7,515,174 B1 ein Videokonferenzsystem, bei dem der Blickkontakt der Nutzer dadurch hergestellt wird, dass mehrere Kameras verwendet werden, deren Bildströme einander überlagert werden.

Des Weiteren beschreibt die US 8,908,008 B2 ein Verfahren, bei dem Bilder des ersten Nutzers mittels einer Kamera durch ein Display hindurch aufgenommen werden, wobei das Display zwischen dem ersten Nutzer und der Kamera angeordnet ist. Von dem Display wird ein Bildstrom des zweiten Nutzers empfangen. Dabei werden die Bilder des zweiten Nutzers so verschoben, dass die Darstellung des Gesichts des zweiten Nutzers mit den Augen des ersten Nutzers und dem Objektiv der Kamera ausgerichtet ist.

Nachteilig an bekannten Videokonferenzverfahren und Videokonferenzsystemen ist, dass der gegenseitige Blickkontakt der Nutzer nur mit einem großen Hardwareaufwand bereitgestellt werden kann. Entweder sind mehrere Kameras zur Aufnahme eines Nutzers vorgesehen oder es werden besondere Anforderungen an die Anzeigevorrichtung gestellt, so dass z. B. durch die Anzeigevorrichtung hindurch Videobilder des Nutzers aufgenommen werden können.

Der vorliegenden Erfindung liegt die Aufgabe zugrunde, ein Videokonferenzverfahren und ein Videokonferenzsystem bereitzustellen, bei denen mit geringem Hardwareaufwand und möglichst geringer Rechenleistung die Nutzer so dargestellt werden können, dass sich ein wirklichkeitsgetreuer Blickkontakt zwischen den Nutzern ergibt.

Erfindungsgemäß wird diese Aufgabe durch ein Videokonferenzverfahren mit den Merkmalen des Anspruchs 1 und ein Videokonferenzsystem mit den Merkmalen des Anspruchs 13 gelöst. Vorteilhafte Ausgestaltungen und Weiterbildungen ergeben sich aus den abhängigen Ansprüchen.

Dementsprechend werden bei dem erfindungsgemäßen Videokonferenzverfahren mit einer ersten Videokonferenzeinrichtung erste Videobilddaten mittels einer ersten Anzeigevorrichtung wiedergegeben und von einer ersten Bildaufnahmevorrichtung zweite Videobilddaten aufgenommen, die zumindest einen die Augen umfassenden Bereich des Kopfes eines ersten Nutzers in einer Position umfassen, bei welcher der erste Nutzer die von der ersten Anzeigevorrichtung wiedergegebenen ersten Videobilddaten betrachtet, wobei die von der ersten Anzeigevorrichtung wiedergegebenen ersten Videobilddaten zumindest eine Darstellung der Augen eines zweiten Nutzers umfassen, die von einer zweiten Bildaufnahmevorrichtung einer zweiten Videokonferenzeinrichtung aufgenommen werden, die entfernt von der ersten Videokonferenzeinrichtung angeordnet ist. Von einer Verarbeitungseinheit werden die von der ersten Bildaufnahmevorrichtung aufgenommenen zweiten Videobilddaten empfangen und verarbeitet und die verarbeiteten zweiten Videobilddaten werden an eine zweite Anzeigevorrichtung der zweiten Videokonferenzeinrichtung übertragen und von dieser wiedergegeben. In den verarbeiteten zweiten Videobilddaten wird anhand einer Ziel-Blickrichtung und/oder einer Ziel-Pose eine Ausgabedarstellung des Kopfes mit einer Blickrichtung und/oder einer Pose so berechnet wird, dass die Blickrichtung und/oder Pose so erscheint, als wäre die erste Bildaufnahmevorrichtung auf einer Geraden angeordnet, die durch einen ersten Umgebungsbereich der Augen des ersten Nutzers und durch einen zweiten Umgebungsbereich der auf der ersten Anzeigevorrichtung dargestellten Augen des zweiten Nutzers geht.

Bei der Verarbeitung der zweiten Videobilddaten durch die Verarbeitungseinheit werden bei dem erfindungsgemäßen Verfahren folgende Schritte durchgeführt:
a. Erkennen des in den zweiten Videobilddaten dargestellten Kopfes des ersten Nutzers;
b. Verarbeiten der Darstellung des im Schritt a. erkannten Kopfes in einem Encoder mittels eines trainierten künstlichen neuronalen Netzes, wobei durch die Verarbeitung:
   b.1. Quell-Erscheinungsparameter des dargestellten Kopfes extrahiert werden, wobei die Quell-Erscheinungsparameter des Kopfes die Erscheinung des Kopfes spezifizieren,
   b.2. ein Quell-Latenzvektor eines Latenzraums gewonnen wird, wobei der Quell-Latenzvektor zumindest die Pose des Kopfes und/oder die Blickrichtung der Augen des Kopfes repräsentiert, und
   b. 3. aus dem Quell-Latenzvektor und der Ziel-Blickrichtung und/oder der Ziel-Pose des Kopfes mit einer Blickrichtungs-Verarbeitungseinheit ein Ziel-Latenzvektor des Latenzraums so berechnet wird, dass der Ziel-Latenzvektor zumindest die Ziel-Blickrichtung und/oder die Ziel-Pose des Kopfes repräsentiert,
c. Erzeugen einer Zwischendarstellung des im Schritt a. erkannten Kopfes mit der im Schritt b.3. gewonnenen Ziel-Pose und/oder mit der im Schritt b.3. gewonnenen Ziel-Blickrichtung in einem Decoder mittels eines Kopfmodells anhand des Ziel-Latenzvektors;
d. Verarbeiten der im Schritt c. erzeugten Zwischendarstellung des Kopfes von einer Warp-Einheit in dem Decoder zum Erzeugen der Ausgabedarstellung des Kopfes für die verarbeiteten zweiten Videobilddaten mittels des Quell-Latenzvektors, des Ziel-Latenzvektors und der Quell-Erscheinungsparameter.

Unter einem Latenzraum wird in dieser Schrift eine Einbettung einer Menge von Objekten in eine Mannigfaltigkeit verstanden, in der Objekte, die einander ähneln, näher beieinander liegen. Die Position innerhalb des Latenzraums kann durch Latenzvektoren definiert werden, die sich aus den Ähnlichkeiten der Objekte ergeben. Ein Latenzraum wird auch als latenter Merkmalsraum oder Einbettungsraum bezeichnet. Die Dimensionalität des Latenzraums kann dabei so gewählt werden, dass sie geringer ist als die Dimensionalität des Merkmalsraums, aus dem die Datenpunkte stammen. Auf diese Weise können Datenpunkte, die ein Bild repräsentieren, komprimiert werden. Latenzräume können durch maschinelles Lernen angepasst werden.

Vorteilhaft an der Verwendung des Latenzraums und der Latenzvektoren bei dem Verfahren der vorliegenden Erfindung ist, dass es durch die Verwendung des Latenzraums möglich ist, die Darstellung eines Kopfes zu verändern, dabei den Kopf jedoch sehr akkurat zu rekonstruieren. Im Latenzraum können Muster auftreten, die es ermöglichen, maschinell zu lernen, wie sich ein Latenzvektor verändert, wenn sich z. B. der Kopf einer Person bewegt, insbesondere, wenn sich der Kopf dreht, z. B von links nach rechts oder umgekehrt. Diese im Latenzraum auftretenden Muster können anhand von Trainingsbildern erlernt werden und dann auf eine andere Person übertragen werden, sodass es möglich ist, die verarbeiteten zweiten Videobilddaten bei der Ausführung des erfindungsgemäßen Verfahrens in Echtzeit zu berechnen.

Vorteilhafterweise werden bei dem erfindungsgemäßen Verfahren die Latenzvektoren von dem künstlichen neuronalen Netz des Encoders erzeugt. Diese Latenzvektoren repräsentieren insbesondere zumindest die Pose des Kopfes und/oder die Blickrichtung der Augen des Kopfes, welche beim Erzeugen der verarbeiteten zweiten Videobilddaten besondere Bedeutung hat, um den Nutzer so darzustellen, dass sich bei der Wiedergabe dieses Nutzers ein wirklichkeitsgetreuer Blickkontakt zu einem anderen Nutzer bei der Ausführung des erfindungsgemäßen Videokonferenzverfahrens ergibt. Die Latenzvektoren ermöglichen insbesondere eine wirklichkeitsgetreue Augenkorrektur bei der Darstellung des Kopfes des Nutzers.

Bei dem Verfahren können Videobilddaten Einzelbild für Einzelbild verarbeitet werden, sodass die verarbeiteten zweiten Videobilddaten eine flüssige Wiedergabe ermöglichen. Die Pose des Kopfes und die Blickrichtung können dabei unabhängig voneinander verändert werden. Insbesondere ist es möglich, in den verarbeiteten zweiten Videobilddaten den Kopf des aufgenommenen Nutzers so zu drehen, dass er eine gerade Position einnimmt und sich ein direkter Blickkontakt zu dem anderen Nutzer bei der Wiedergabe ergibt.

Bei dem erfindungsgemäßen Verfahren ist es möglich, Videobilddaten in Echtzeit zu erzeugen, bei denen die Pose des Kopfes und/oder die Blickrichtung so verändert wurden, dass sich ein wirklichkeitsgetreuer Blickkontakt ergibt, ohne dass spezielle Hardware für die Berechnung der veränderten Videobilddaten erforderlich ist.

Der erste bzw. zweite Umgebungsbereich beinhaltet insbesondere die dargestellten Augen des ersten bzw. zweiten Nutzers. Der erste bzw. zweite Umgebungsbereich kann beispielsweise die Strecke von dem ersten dargestellten Auge zu dem zweiten dargestellten Auge des ersten bzw. zweiten Nutzers sein. Der Umgebungsbereich kann dabei auch Bereiche rechts und links sowie oberhalb und unterhalb dieser Strecke beinhalten.

Insbesondere wird in den verarbeiteten zweiten Videobilddaten eine Ausgabedarstellung des Kopfes mit einer Blickrichtung und/oder einer Pose anhand einer Ziel-Blickrichtung und/oder einer Ziel-Pose so berechnet, dass die Blickrichtung und/oder Pose so erscheint, als wäre die erste Bildaufnahmevorrichtung auf einer Geraden angeordnet, die durch einen ersten Umgebungsbereich der Augen des ersten Nutzers und durch einen zweiten Umgebungsbereich der auf der ersten Anzeigevorrichtung dargestellten Augen des zweiten Nutzers geht.

Das erfindungsgemäße Videokonferenzverfahren kann vorteilhafterweise mit einer Hardware eines herkömmlichen Videokonferenzsystems ausgeführt werden. Es kann somit insbesondere rein softwareseitig ausgeführt werden, indem Daten von der entsprechenden Bildaufnahmevorrichtung empfangen werden und Daten an die entsprechende Anzeigevorrichtung übertragen werden. Erfindungsgemäß wird dazu die erste Bildaufnahmevorrichtung rein softwareseitig virtuell in eine andere Perspektive verschoben. Dies geschieht, indem aus dem von der realen Bildaufnahmevorrichtung erfassten Videobild, insbesondere mittels Verfahren der künstlichen Intelligenz, ein fiktives, aber der Realität nahekommendes Videobild erzeugt wird, das dem Bild nahekommt, welches die Bildaufnahmevorrichtung sehen würde, wenn sie nahe der Darstellung der Augen des zweiten Nutzers eingebaut wäre.

Durch die Veränderung der Videobilddaten, welche zumindest die Augen des Nutzers wiedergeben, wird ein verarbeitetes, d. h. verändertes, Videobild erzeugt, bei dem der erste Nutzer eine Ziel-Blickrichtung hat, welche auf die erste Bildaufnahmevorrichtung gerichtet ist, obwohl er tatsächlich nicht in die erste Bildaufnahmevorrichtung blickt, sondern z. B. auf eine Anzeige auf der ersten Anzeigevorrichtung. Für den zweiten Nutzer erscheint die Wiedergabe der verarbeiteten, d. h. veränderten, Videobilddaten des ersten Nutzers auf der zweiten Anzeigevorrichtung dann so, dass die Blickrichtung des ersten Nutzers so erscheint, als würde er dem zweiten Nutzer gegenübersitzen. Blickt der erste Nutzer in die auf der ersten Anzeigevorrichtung dargestellten Augen des zweiten Nutzers, so ergibt sich ein direkter Blickkontakt bei der Wiedergabe der veränderten Videobilddaten des ersten Nutzers auf der zweiten Anzeigevorrichtung. Betrachtet der erste Nutzer einen anderen Bereich der Darstellung auf der ersten Anzeigevorrichtung, so ist bei der Darstellung der veränderten Videobilddaten die Blickrichtung des ersten Nutzers, wie sie von der zweiten Anzeigevorrichtung dargestellt wird, in gleicher Weise von dem zweiten Nutzer abgewandt, wie es erscheinen würde, wenn der erste Nutzer dem zweiten Nutzer gegenübersitzen würde. Auf diese Weise kann mit geringem Hardwareaufwand, der nur in der Verarbeitungseinheit liegt, ein Videokonferenzverfahren bereitgestellt werden, welches für den zweiten Nutzer den Eindruck erweckt, als würde der erste Nutzer ihm real gegenübersitzen. Dabei wird insbesondere ein direkter Blickkontakt hergestellt, wenn der erste Nutzer in die Darstellung der Augen des zweiten Nutzers auf der ersten Anzeigevorrichtung blickt.

In den Videobilddaten wird insbesondere die Wiedergabe des die Augen umfassenden Bereichs des Kopfes des ersten Nutzers so verändert, dass die Ziel-Blickrichtung des ersten Nutzers in den veränderten Videobilddaten so erscheint, als wäre die erste Bildaufnahmevorrichtung auf einer Geraden angeordnet, die durch eines der Augen des ersten Nutzers und durch eines der auf der ersten Anzeigevorrichtung dargestellten Augen des zweiten Nutzers geht. Die Videobilddaten werden insbesondere so verändert, dass die Blickrichtung des ersten Nutzers in den veränderten Videobilddaten so erscheint, als wäre die erste Bildaufnahmevorrichtung auf dieser Geraden hinter oder bei einem der auf der ersten Anzeigevorrichtung dargestellten Augen des zweiten Nutzers angeordnet. Auf diese Weise kann die Blickrichtung des ersten Nutzers in den veränderten Videobilddaten noch realistischer den Eindruck vermitteln, als sitze der erste Nutzer dem zweiten Nutzer gegenüber. IA: ok

Die Quell-Erscheinungsparameter des dargestellten Kopfes spezifizieren bei dem erfindungsgemäßen Verfahren die Erscheinung des Kopfes. Gemäß einer Weiterbildung des erfindungsgemäßen Videokonferenzverfahrens umfassen die Quell-Erscheinungsparameter des Kopfes Farbmerkmale der Darstellung des Kopfes. Hierzu gehören beispielsweise die Augenfarbe, die Haarfarbe und die Gesichtsfarbe des dargestellten Kopfes des Nutzers, wobei berücksichtigt wird, dass sich die jeweilige Farbe aufgrund der Lichtverhältnisse bei der Aufnahme der zweiten Videobilddaten verändern kann.

Gemäß einer Weiterbildung des erfindungsgemäßen Videokonferenzverfahrens repräsentiert der Quell-Latenzvektor und/oder der Ziel-Latenzvektor ferner zumindest die Gesichtsform, den Gesichtsausdruck, gegebenenfalls eine Brille und/oder eine Haarstruktur des Kopfes.

Auf diese Weise kann durch die Verwendung des Latenzraums die Darstellung eines Kopfes sehr akkurat zu rekonstruiert werden. Die Pose des Kopfes, die Form des Gesichts, der Gesichtsausdruck, das etwaige Tragen einer Brille und die Darstellung der Haare können in den verarbeiteten zweiten Videobilddaten sehr wirklichkeitsgetreu wiedergegeben werden.

Bei einer Videokonferenz ist ferner nicht nur der Blickkontakt zwischen den Nutzern von besonderer Bedeutung, sondern auch die Gestik, die Mimik und der Gefühlsausdruck, der z. B. durch einen Gesichtsausdruck des jeweiligen Nutzers bestimmt wird. Der durch den Gesichtsausdruck vermittelte Gefühlsausdruck des ersten Nutzers kann bei dem erfindungsgemäßen Videokonferenzverfahren beibehalten werden, so dass die Konversation der Nutzer durch die Veränderung der Videobilddaten des ersten Nutzers nicht beeinträchtigt wird.

Bei der Repräsentation des Gesichtsausdrucks durch einen Latenzvektor wird dabei insbesondere berücksichtigt, ob eine Ausdrucksveränderung durch eine Bewegung des Kopfes oder der Blickrichtung der aufgenommenen Person erfolgt oder ob sich der Gesichtsausdruck als solcher verändert. Bei dem erfindungsgemäßen Verfahren wird eine solche Gesichtsausdrucksveränderung beispielsweise durch eine Veränderung der Form des Mundes der aufgenommenen Person erkannt. Das erfindungsgemäße Verfahren unterscheidet dies, da nur die Pose des Kopfes und/oder die Blickrichtung verändert wird, nicht jedoch der eigentliche Gesichtsausdruck, der beispielsweise ein Lächeln darstellt. Diese Trennung zwischen der Veränderung der Pose des Kopfes einerseits und dem Gesichtsausdruck andererseits kann durch erkannte Muster im Latenzraum bei dem erfindungsgemäßen Verfahren ermöglicht werden.

Gemäß einer Weiterbildung des erfindungsgemäßen Videokonferenzverfahrens umfasst der Quell-Latenzvektor 128 Variablen oder weniger. Vorteilhafterweise kann hierdurch eine Kompression der zu verarbeitenden Daten erfolgen, die eine Verarbeitung der zweiten Videobilddaten in Echtzeit ermöglicht.

Gemäß einer Weiterbildung des erfindungsgemäßen Videokonferenzverfahrens wird das künstliche neuronale Netz durch folgende Schritte trainiert:
S1. Empfangen eines Quell-Trainingsbilds und eines zugeordneten Ziel-Trainingsbilds, wobei das Quell-Trainingsbild eine Darstellung eines die Augen umfassenden Bereich des Kopfes einer Person umfasst und wobei das Ziel-Trainingsbild die in dem Quell-Trainingsbild dargestellte Person mit einer veränderten Ziel-Blickrichtung und/oder einer veränderten Ziel-Pose des Kopfes der Person umfasst,
S2. Verarbeiten des Quell-Trainingsbilds in einem Trainings-Encoder mittels des künstlichen neuronalen Netzes, wobei durch die Verarbeitung:
S2.1. Quell-Trainings-Erscheinungsparameter des in dem Quell-Trainingsbild dargestellten Kopfes extrahiert werden, wobei die Quell-Trainings-Erscheinungsparameter die Erscheinung des Kopfes spezifizieren,
S2.2. aus dem Quell-Trainingsbild ein Quell-Trainings-Latenzvektor des Latenzraums gewonnen wird, wobei der Quell-Trainings-Latenzvektor zumindest eine Quell-Pose und/oder eine Quell-Blickrichtung der Augen des in dem Quell-Trainingsbild dargestellten Kopfes repräsentiert, und
S2.3. aus dem Ziel-Trainingsbild ein Ziel-Trainings-Latenzvektor des Latenzraums gewonnen wird, wobei der Ziel-Trainings-Latenzvektor zumindest die Ziel-Pose und/oder die Ziel-Blickrichtung der Augen des in dem Ziel-Trainingsbild dargestellten Kopfes repräsentiert,
S3. Erzeugen einer Trainings-Zwischendarstellung des Quell-Trainingsbilds mit der im Schritt S2.3 gewonnenen Ziel-Pose und/oder mit der im Schritt S2.3. gewonnenen Ziel-Blickrichtung in einem Trainings-Decoder zum Erlernen des Kopfmodells anhand des Ziel-Trainings-Latenzvektors;
S4. Verarbeiten der im Schritt S3. erzeugten Trainings-Zwischendarstellung des Kopfes mittels einer Trainings-Warp-Einheit in dem Trainings-Decoder zum Erzeugen einer Trainings-Ausgabedarstellung des Kopfes, wobei mittels des Quell-Trainings-Latenzvektors, des Ziel-Trainings-Latenzvektors und der Quell-Trainings-Erscheinungsparameter die Trainings-Zwischendarstellung so verändert wird, dass die Trainings-Ausgabedarstellung erzeugt wird,
S5. Bewerten einer ersten Verlustfunktion auf der Basis eines Vergleichs der Trainings-Ausgabedarstellung mit dem zugehörigen Ziel-Trainingsbild und Verändern von Gewichten des künstlichen neuronalen Netzes zur Annäherung der Trainings-Ausgabedarstellung an das zugehörige Ziel-Trainingsbild,
S6. Wiederholen der Schritte S1. bis S5. zum Erzeugen des trainierten künstlichen neuronalen Netzes und
S7. Speichern der Gewichte des trainierten künstlichen neuronalen Netzes.

Vorteilhafterweise werden beim Training des künstlichen neuronalen Netzes dieselben Einheiten verwendet wie bei der Ausführung des Videokonferenzverfahrens mit dem trainierten künstlichen neuronalen Netz. Der Trainings-Encoder entspricht somit dem Encoder, der Trainings-Decoder entspricht dem Decoder und die Trainings-Warp-Einheit entspricht der Warp-Einheit. Das künstliche neuronale Netz wird insbesondere so trainiert, dass die Pose des Kopfes und/oder die Blickrichtung zwar korrigiert werden, die Erscheinung des Kopfes jedoch beibehalten wird. Insbesondere werden die Augenfarbe, die Gesichtsfarbe und die Haarfarbe beibehalten. Ferner wird der Gesichtsausdruck der aufgenommenen Person bei den veränderten Videobilddaten beibehalten. Bei dem Training des künstlichen neuronalen Netzes wird dies vorteilhafterweise dadurch erreicht, dass Muster für diese Veränderungen im Latenzraum gefunden werden. Wenn beispielsweise in den Videobilddaten ein Kopf von links nach rechts gedreht wird, wird das künstliche neuronale Netz dadurch trainiert, dass ein Trainingsvideo mit Quell-Trainingsbildern und zugeordneten Ziel-Trainingsbildern verwendet wird, welche eine Person zeigen, welche den Kopf von links nach rechts dreht. Für jedes Einzelbild des Videos werden die Latenzvektoren berechnet. Es wird dann ein Kopfdrehungsmodell trainiert, welches für kleine Drehungen ein Muster für die Veränderung der Latenzvektoren erlernt. Mit anderen Worten, für einen gegebenen Latenzvektor und einen gegebenen Drehwinkel kann das Kopfdrehungsmodell neue Latenzvektoren erzeugen. Bei der Ausführung des Videokonferenzverfahrens wird der Decoder dann mit den gedrehten Latenzvektoren betrieben, sodass eine Darstellung eines gedrehten Kopfes erzeugt wird.

Die Trainingsbilder können insbesondere aus Videos, die in großen Mengen zugänglich sind, gewonnen werden. Bei den Trainingsbildern kann sich daher auch der Gesichtsausdruck verändern. Das Kopfmodell lernt auch den Gesichtsausdruck zu ändern. Bei der Ausführung des Verfahrens kann die Änderung aber nur auf Blickrichtung und die Kopfposition begrenzt werden.

Der Trainings-Decoder ist ein lernfähiges künstliches neuronales Netzwerk, der das Kopfmodell erlernt. D.h. der Decoder lernt eine interne Darstellung des Kopfes. Diese kann die Form, die Position, eine Brille, etc. umfassen. Der Trainings-Decoder erzeugt diese Darstellung aus Latenzvektoren. Seine Fähigkeit, diese Darstellung zu lernen und zu erzeugen, ist äquivalent zu dem Kopfmodell.

Gemäß einer Weiterbildung des erfindungsgemäßen Videokonferenzverfahrens sind der Quell-Trainings-Latenzvektor und der zugeordnete Ziel-Trainings-Latenzvektor interpolierbar, so dass eine allmähliche Veränderung von dem Quell-Trainings-Latenzvektor an den zugeordneten Ziel-Trainings-Latenzvektor eine allmähliche Veränderung von dem Quell-Trainingsbild an das zugeordnete Ausgabe-Trainingsbild erzeugt. Auf diese Weise ergibt sich aus einer fortwährenden Veränderung des Quell-Latenzvektors zu dem Ziel-Latenzvektor eine fortwährende Veränderung der Darstellung des Kopfes in den verarbeiteten zweiten Videobilddaten von der Darstellung des erkannten Kopfes zu der Ausgabedarstellung dieses Kopfes.

Gemäß einer Weiterbildung des erfindungsgemäßen Videokonferenzverfahrens ist die Blickrichtungs-Verarbeitungseinheit zumindest von einem weiteren künstlichen neuronalen Netz gebildet. Durch das weitere künstliche neuronale Netz wird insbesondere erreicht, dass bei der Darstellung des Kopfes in den verarbeiteten zweiten Videobilddaten die veränderte Blickrichtung wirklichkeitsgetreu erscheint. Außerdem wird durch das weitere künstliche neuronale Netz dafür gesorgt, dass eine Drehung der Darstellung des Kopfes auch zu einer Drehung der Blickrichtung der Augen dieses Kopfes führt.

Das weitere künstliche neuronale Netz wird für das erfindungsgemäße Videokonferenzverfahren insbesondere durch folgende Schritte trainiert:
T1. Aufnehmen eines Blickrichtungs-Videos einer Person, welche den Kopf dreht,
T2. Erzeugen von aufeinanderfolgenden Einzelbildern des Blickrichtungs-Videos,
T3. Berechnen eines Blickrichtungs-Latenzvektors für jedes Einzelbild,
T4. Trainieren eines Blickrichtungs-Kopfmodels mittels einer zweiten Verlustfunktion auf der Basis eines Vergleichs eines Einzelbilds und eines darauffolgenden Einzelbilds,
T5. Wiederholen des Schritts T4. für aufeinanderfolgende Einzelbilder zum Erzeugen des weitere trainierten künstlichen neuronalen Netzes und
T6. Speichern des weitere trainierten künstlichen neuronalen Netzes.

Durch dieses Training des weiteren künstlichen neuronalen Netzes kann ein Blickrichtungs-Kopfmodell erzeugt werden, welches eine wirklichkeitsgetreue Veränderung der Blickrichtung in der Darstellung des Kopfes des Nutzers in den verarbeiteten zweiten Videobilddaten ermöglicht.

Das Kopfmodell ist insbesondere von einer Komponente des Decoders des künstlichen neuronalen Netzes gebildet.

Gemäß einer Weiterbildung des erfindungsgemäßen Videokonferenzverfahrens werden beim Erzeugen der Zwischendarstellung durch das künstliche neuronale Netz Fouriermerkmale als Ausgangsblock verwendet.

Gemäß einer Weiterbildung des erfindungsgemäßen Videokonferenzverfahrens wird mittels der erfassten Blickrichtung des ersten Nutzers bestimmt, ob der erste Nutzer einen Punkt der ersten Anzeigevorrichtung betrachtet, und, wenn bestimmt wurde, dass ein Punkt der ersten Anzeigevorrichtung betrachtet wird, wird ermittelt, welches Objekt aktuell bei diesem Punkt von der ersten Anzeigevorrichtung dargestellt wird. Auf diese Weise kann insbesondere unterschieden werden, ob der erste Nutzer ein Gesicht betrachtet, welches von der ersten Anzeigevorrichtung wiedergegeben wird, oder ob der erste Nutzer ein anderes Objekt, welches von der ersten Anzeigevorrichtung dargestellt wird, betrachtet.

Wenn ermittelt worden ist, dass das Objekt die Darstellung des Gesichts des zweiten Nutzers ist, erscheint bei der Verarbeitung der Videobilddaten die Blickrichtung des in den veränderten Videobilddaten dargestellten ersten Nutzers so, dass der erste Nutzer das auf der ersten Bildaufnahmevorrichtung dargestellte Gesicht des zweiten Nutzers betrachtet. Wenn das dargestellte Bild des zweiten Nutzers ausreichend groß ist, kann insbesondere in der Ziel-Blickrichtung unterschieden werden, wohin im dargestellten Gesicht des zweiten Nutzers der erste Nutzer blickt. Dabei kann die Position der Augen, der Nase und/oder des Mundes bei der Darstellung des zweiten Nutzers mittels an sich bekannter Objekterkennungsverfahren ermittelt werden. Die Blickrichtung des ersten Nutzers ist in den veränderten Videobilddaten dann so ausgerichtet, dass der erste Nutzer den jeweiligen Bereich des dargestellten Gesichtes des zweiten Nutzers betrachtet.

Gemäß einer anderen Ausgestaltung des erfindungsgemäßen Videokonferenzverfahrens erscheint bei der Verarbeitung der Videobilddaten die Ziel-Blickrichtung des in den veränderten Videobilddaten dargestellten ersten Nutzers so, dass der erste Nutzer ein auf der ersten Anzeigevorrichtung dargestelltes Auge des zweiten Nutzers betrachtet, wenn ermittelt worden ist, dass das Objekt die Darstellung des Gesichts des zweiten Nutzers ist, jedoch nicht ermittelt wurde, welcher Bereich der Darstellung des Gesichts betrachtet wird. In diesem Fall wird somit ein direkter Blickkontakt durch die veränderten Videobilddaten hergestellt, wenn der erste Nutzer das dargestellte Gesicht des zweiten Nutzers auf der ersten Anzeigevorrichtung betrachtet.

Gemäß einer Weiterbildung des erfindungsgemäßen Videokonferenzverfahrens umfassen die von der ersten Anzeigevorrichtung wiedergegebenen ersten Videobilddaten zumindest eine Darstellung der Augen mehrerer zweiter Nutzer, die von der zweiten Bildaufnahmevorrichtung und/oder weiteren zweiten Bildaufnahmevorrichtungen aufgenommen werden. In diesem Fall wird ermittelt, ob das Objekt die Darstellung des Gesichts eines bestimmten der mehreren zweiten Nutzer ist. Bei der Verarbeitung der Videobilddaten erscheint die Blickrichtung des in den veränderten Videobilddaten dargestellten ersten Nutzers dann so, als wäre die erste Bildaufnahmevorrichtung auf der Geraden angeordnet, die durch einen ersten Umgebungsbereich der Augen des ersten Nutzers und durch einen zweiten Umgebungsbereich der auf der ersten Anzeigevorrichtung dargestellten Augen des bestimmten der mehreren zweiten Nutzer geht.

Diese Weiterbildung des erfindungsgemäßen Videokonferenzverfahrens umfasst die Konstellation, bei der mehrere Nutzer bei der zweiten Videokonferenzeinrichtung an der Videokonferenz teilnehmen, wobei die zweiten Nutzer von derselben Bildaufnahmevorrichtung aufgenommen werden oder gegebenenfalls an verschiedenen Orten von jeweils separaten Bildaufnahmevorrichtungen aufgenommen werden. Die Ziel-Blickrichtung des ersten Nutzers ist dann in den veränderten Videobilddaten so ausgebildet, dass der auf der ersten Anzeigevorrichtung angeschaute zweite Nutzer auf seiner zweiten Anzeigevorrichtung sieht, dass er von dem ersten Nutzer angeschaut wird. Die anderen zweiten Nutzer hingegen sehen auf ihren zweiten Anzeigevorrichtungen, dass sie nicht angeschaut werden.

Gemäß einer weiteren Ausgestaltung des erfindungsgemäßen Videokonferenzverfahrens wird zum Generieren der Darstellung der veränderten Pose des Kopfes eine Maske berechnet, welche angibt, ob ein Pixel zu der Darstellung des Kopfes oder zu einer Darstellung eines Hintergrunds gehört. Durch die Maske kann die Darstellung des Kopfes von der Darstellung des Hintergrunds separiert werden, damit beim Erzeugen der verarbeiteten zweiten Videobilddaten nur die Darstellung des Kopfes und nicht die Darstellung des Hintergrunds verändert wird.

Gemäß einer Weiterbildung des erfindungsgemäßen Videokonferenzverfahrens führt die Warp-Einheit eine Backward-Warp-Technik durch.

Die Warping-Technik beschreibt bei der Bildverarbeitung ein Verformen und/oder Verzerren eines Bildes. Bei der Transformation eines Bildes wird die Information benötigt, wie ein einzelner Pixel eines Bildes, das transformiert werden soll, beim Erzeugen des neuen Bildes bewegt werden soll. Es gibt verschiedene Möglichkeiten diese Transformation durchzuführen.

Zum einen ist es möglich, dass für jede Position im Ausgangsbild der korrespondierende Wert im transformierten Bild berechnet wird. Dieses Verfahren wird als Forward-Warping bezeichnet, da die Pixel vorwärts von dem Koordinatengerüst des Ausgangsbildes in das neue Bild bewegt werden. Nachteilig an diesem Verfahren ist, dass nicht jedem Pixel des neuen Bildes zwangsläufig ein Wert zugewiesen werden kann und auf einige Pixel im neuen Bild können auch mehrere Pixel des Ursprungsbildes weisen. Aus diesem Grund wird erfindungsgemäß die so genannte Backward-Warping-Technik eingesetzt. In diesem Fall wird für jedes Pixel des neuen Bildes eine Koordinate im Ursprungsbild berechnet, von der sein Wert ausgeht. Es handelt sich dabei um die Umkehrung der Transformationsfunktion. Beim Backward-Warping kann ein Interpolationsschema für das Ursprungsbild verwendet werden, um Werte an Koordinaten zwischen Pixeln zu erhalten.

Die Backward-Warping-Technik wird insbesondere eingesetzt, um die Farben für das Kopfmodell aus den Latenzvektoren und den Merkmalsparametern zu erzeugen. Die Backward-Warping-Technik wird dabei getrennt von dem Kopfmodell eingesetzt. Durch diese Trennung der Warping-Technik und des Kopfmodells unterschiedet sich das erfindungsgemäße Verfahren z. B. von bekannten LIA (Latent Image Animator)-Verfahren. Durch das Kopfmodell wird die Darstellung des Kopfes rekonstruiert; durch die Warp-Technik dann die Erscheinung einschließlich des Ausdrucks und der Farben generiert.

Gemäß einer Weiterbildung des erfindungsgemäßen Videokonferenzverfahrens werden von der ersten Bildaufnahmevorrichtung aufeinanderfolgende Videoframes aufgenommen und zumindest temporär gespeichert. Bei der Verarbeitung der Videobilddaten werden dann fehlende Bildelemente des Restbereichs aus gespeicherten Videoframes übernommen. Alternativ können die fehlenden Bildelemente des Restbereichs synthetisiert werden, beispielsweise durch Verfahren der künstlichen Intelligenz. Bei der Änderung der Blickrichtung bei der Darstellung des ersten Nutzers können Bildteile sichtbar werden, welche bei der aufgenommenen Darstellung des ersten Nutzers nicht sichtbar waren. Solche fehlenden Bildbereiche müssen ergänzt werden, um weiterhin eine realistische Darstellung zu erreichen. Diese Ergänzungen können vorteilhafterweise zuvor gespeicherten Videoframes entnommen werden oder sie können synthetisiert werden.

Erfindungsgemäß werden somit zum Erzeugen der verarbeiteten zweiten Videobilddaten Bildinhalte ergänzt, die bei der Darstellung des erkannten Kopfes verdeckt waren und bei der Darstellung des Kopfes in der veränderten Pose sichtbar geworden sind.

Bei dem erfindungsgemäßen Videokonferenzverfahrens kann mittels der Backward-Warping-Technik zusätzlich zu der Farbgebung auch noch eine Ergänzung von Bereichen durchgeführt werden, die durch die Veränderung der Darstellung des Kopfes sichtbar geworden sind; beispielsweise wird beim Öffnen des Mundes das Innere fes Mundes ausgefüllt.

Gemäß einer Weiterbildung des erfindungsgemäßen Videokonferenzverfahrens umfasst die Warp-Einheit ferner ein faltendes neuronales Netzwerk (convolutional neural network).

Das erfindungsgemäße Videokonferenzsystem umfasst eine erste Videokonferenzeinrichtung, die eine erste Anzeigevorrichtung und eine erste Bildaufnahmevorrichtung aufweist, wobei die erste Bildaufnahmevorrichtung angeordnet ist, zumindest einen die Augen umfassenden Bereich des Kopfes eines ersten Nutzers in einer Position aufzunehmen, bei welcher der erste Nutzer die von der ersten Anzeigevorrichtung wiedergegebenen ersten Videobilddaten betrachtet. Ferner umfasst das Videokonferenzsystem eine zweite Videokonferenzeinrichtung, die entfernt von der ersten Videokonferenzeinrichtung angeordnet ist, die datentechnisch mit der ersten Videokonferenzeinrichtung gekoppelt ist und die eine zweite Anzeigevorrichtung zur Wiedergabe von Videobilddaten aufweist, die von der ersten Bildaufnahmevorrichtung aufgenommen werden. Des Weiteren umfasst das Videokonferenzsystem eine Verarbeitungseinheit, welche mit der ersten Bildaufnahmevorrichtung gekoppelt ist und welche ausgebildet ist, die von der ersten Bildaufnahmevorrichtung aufgenommenen zweiten Videobilddaten zu empfangen und zu verarbeiten und die verarbeiteten zweiten Videobilddaten an die zweite Anzeigevorrichtung der zweiten Videokonferenzeinrichtung zu übertragen. In den verarbeiteten zweiten Videobilddaten wird dabei anhand einer Ziel-Blickrichtung und/oder einer Ziel-Pose eine Ausgabedarstellung des Kopfes mit einer Blickrichtung und/oder einer Pose so berechnet wird, dass die Blickrichtung und/oder Pose so erscheint, als wäre die erste Bildaufnahmevorrichtung auf einer Geraden angeordnet, die durch einen ersten Umgebungsbereich der Augen des ersten Nutzers und durch einen zweiten Umgebungsbereich der auf der ersten Anzeigevorrichtung dargestellten Augen des zweiten Nutzers geht.

Bei dem erfindungsgemäßen Videokonferenzsystem ist die Verarbeitungseinheit ausgebildet, bei der Verarbeitung der zweiten Videobilddaten folgende Schritte durchzuführen:
a. Erkennen des in den zweiten Videobilddaten dargestellten Kopfes des ersten Nutzers (5);
b. Verarbeiten der Darstellung des im Schritt a. erkannten Kopfes in einem Encoder mittels eines trainierten künstlichen neuronalen Netzes, wobei durch die Verarbeitung:
   b.1. Quell-Erscheinungsparameter (f) des dargestellten Kopfes extrahiert werden, wobei die Quell-Erscheinungsparameter des Kopfes die Erscheinung des Kopfes spezifizieren,
   b.2. ein Quell-Latenzvektor (zs) eines Latenzraums gewonnen wird, wobei der Quell-Latenzvektor zumindest die Pose des Kopfes und/oder die Blickrichtung (16) der Augen des Kopfes repräsentiert, und
   b. 3. aus dem Quell-Latenzvektor (zs) und der Ziel-Blickrichtung und/oder der Ziel-Pose des Kopfes mit einer Blickrichtungs-Verarbeitungseinheit ein Ziel-Latenzvektor (zt) des Latenzraums so berechnet wird, dass der Ziel-Latenzvektor zumindest die Ziel-Blickrichtung und/oder die Ziel-Pose des Kopfes repräsentiert,
c. Erzeugen einer Zwischendarstellung des im Schritt a. erkannten Kopfes mit der im Schritt b.3. gewonnenen Ziel-Pose und/oder mit der im Schritt b.3. gewonnenen Ziel-Blickrichtung (16) in einem Decoder mittels eines Kopfmodells anhand des Ziel-Latenzvektors;
d. Verarbeiten der im Schritt c. erzeugten Zwischendarstellung des Kopfes von einer Warp-Einheit in dem Decoder zum Erzeugen der Ausgabedarstellung des Kopfes für die verarbeiteten zweiten Videobilddaten mittels des Quell-Latenzvektors, des Ziel-Latenzvektors und der Quell-Erscheinungsparameter.

Das erfindungsgemäße Videokonferenzsystem ist insbesondere ausgebildet, das vorstehend beschriebene Videokonferenzverfahren auszuführen. Es weist somit dieselben Vorteile auf.

Des Weiteren betrifft die Erfindung ein Computerprogrammprodukt, umfassend Befehle, die bei der Ausführung des Programms durch einen Computer diesen veranlassen, das vorstehend beschriebene Verfahren auszuführen.

Im Folgenden werden Ausführungsbeispiele der Erfindung mit Bezug zu den Zeichnungen erläutert:
- Fig. 1: zeigt den Aufbau eines Ausführungsbeispiels des erfindungsgemäßen Videokonferenzsystems,
- Fig. 2: veranschaulicht die Geometrie der Blickrichtung des ersten Nutzers,
- Fig. 3: zeigt den Aufbau der Traings-Verarbeitungseinheit für das Training des neuronalen Netzes des erfindungsgemäßen Videokonferenzsystems,
- Fig. 4: zeigt den Ablauf des Trainings des im erfindungsgemäßen Videokonferenzsystem eingesetzten neuronalen Netzes,
- Fig. 5: zeigt Beispielbilder, die beim Ausführen des Trainings des im erfindungsgemäßen Videokonferenzsystem eingesetzten neuronalen Netzes erzeugt werden,
- Fig. 6: zeigt weitere Beispielbilder, die beim Ausführen des Trainings des im erfindungsgemäßen Videokonferenzsystem eingesetzten neuronalen Netzes erzeugt werden,
- Fig. 7: zeigt den Aufbau der Verarbeitungseinheit gemäß dem Ausführungsbeispiel des erfindungsgemäßen Videokonferenzsystems und

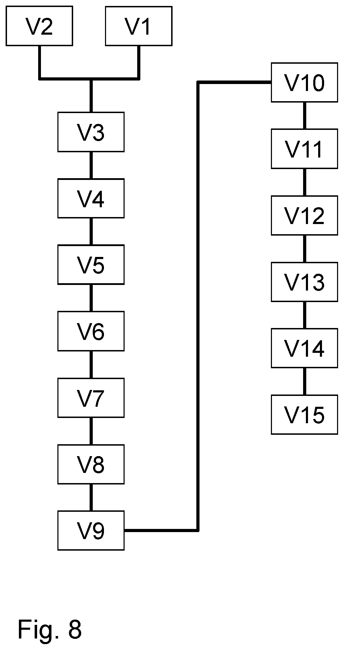

- Fig. 8: zeigt den Ablauf eines Ausführungsbeispiels des erfindungsgemäßen Verfahrens.

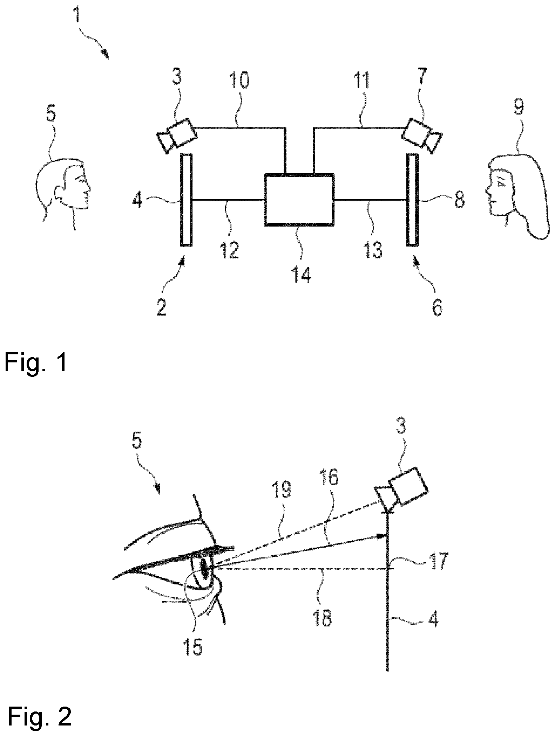

Mit Bezug zu den Figuren 1 und 2 wird das Ausführungsbeispiel des erfindungsgemäßen Videokonferenzsystems 1 erläutert:
Das Videokonferenzsystem 1 umfasst eine erste Videokonferenzeinrichtung 2 mit einer ersten Bildaufnahmevorrichtung 3, beispielsweise einer ersten Kamera, und einer ersten Anzeigevorrichtung 4, beispielsweise einem Display mit einer Anzeigefläche. In Aufnahmerichtung der ersten Bildaufnahmevorrichtung 3 befindet sich ein erster Nutzer 5, welcher die Wiedergabe der ersten Anzeigevorrichtung 4 betrachten kann, während er von der ersten Bildaufnahmevorrichtung 3 aufgenommen wird. Bei dem Ausführungsbeispiel wird zumindest der Kopf des ersten Nutzers 5 von der ersten Bildaufnahmevorrichtung 3 aufgenommen.

Entfernt von der ersten Videokonferenzeinrichtung 2 ist eine entsprechende zweite Videokonferenzeinrichtung 6 angeordnet. Diese umfasst eine zweite Bildaufnahmevorrichtung 7, die auch als Kamera ausgebildet sein kann, und eine zweite Anzeigevorrichtung 8, beispielsweise ein Display mit einer Anzeigefläche. Vor der zweiten Videokonferenzeinrichtung 6 befindet sich ein zweiter Nutzer 9, welcher von der zweiten Bildaufnahmevorrichtung 7 aufgenommen werden kann, während er gleichzeitig die Wiedergabe der zweiten Anzeigevorrichtung 8 betrachtet.

Über die Datenverbindungen 10 bis 13 sind die beiden Bildaufnahmevorrichtungen 3 und 7 sowie die beiden Anzeigevorrichtungen 4 und 8 mit einer Verarbeitungseinheit 14 gekoppelt. Die Datenverbindungen 10 bis 13 können zumindest zum Teil Datenfernverbindungen, beispielsweise über das Internet, sein. Die Verarbeitungseinheit 14 kann bei der ersten oder zweiten Videokonferenzeinrichtung 2, 6 angeordnet sein. Ferner kann sie bei einem zentralen Server oder auch auf mehrere Server oder Verarbeitungseinheiten aufgeteilt seien, beispielsweise jeweils eine Verarbeitungseinheit für jeden Nutzer. Des Weiteren könnte die Verarbeitungseinheit 14 auf Einheiten bei der ersten und der zweiten Videokonferenzeinrichtung 2, 6 und optional einen separaten Server aufgeteilt sein, sodass bei der einen Videokonferenzeinrichtung 2 die Aufnahme der Videobilddaten und bei der anderen Videokonferenzeinrichtung 6 und/oder dem separaten Server die Verarbeitung der Videobilddaten erfolgt.

Ferner können auch statt der Videobilddaten nur Metadaten übertragen werden, aus denen dann erst die empfängerseitige zweite Videokonferenzeinrichtung 6 die anzuzeigenden Videobilddaten synthetisiert. Durch eine solche Kompression könnte die Bandbreite für die Datenübertragung gesenkt werden.

Wie in Fig. 2 gezeigt, betrachtet der erste Nutzer 5 mit einer Blickrichtung 16 ausgehend von der Position 15 mit einem seiner Augen einen Punkt auf der ersten Anzeigevorrichtung 4. Dabei kann die erste Bildaufnahmevorrichtung 3 den ersten Nutzer 5 aus einer Aufnahmerichtung 19 aufnehmen. Gleichzeitig kann die erste Anzeigevorrichtung 4 bei einer Videokonferenz Videobilddaten wiedergeben, welche von der zweiten Bildaufnahmevorrichtung 7 aufgenommen wurden und welche von den Kopf des zweiten Nutzers 9 zeigen. Dabei wird mindestens ein Auge des zweiten Nutzers 9 bei einer Position 17 von der ersten Anzeigevorrichtung 4 dargestellt.

Die Verarbeitungseinheit 14 ist ausgebildet, die von der ersten Bildaufnahmevorrichtung 3 aufgenommenen zweiten Videobilddaten zu empfangen und zu verarbeiten und die verarbeiteten zweiten Videobilddaten an die zweite Anzeigevorrichtung 8 der zweiten Videokonferenzeinrichtung 6 zu übertragen, so dass die zweite Anzeigevorrichtung 8 diese verarbeiteten zweiten Videobilddaten wiedergeben kann. In gleicher Weise ist die Verarbeitungseinheit 14 ausgebildet, die von der zweiten Bildaufnahmevorrichtung 7 aufgenommenen ersten Videobilddaten zu empfangen und zu verarbeiten und die verarbeiteten ersten Videobilddaten an die erste Anzeigevorrichtung 4 der ersten Videokonferenzeinrichtung 2 zu übertragen, welche die verarbeiteten ersten Videobilddaten dann wiedergeben kann. Wie es im Folgenden mit Bezug zu den Ausführungsbeispielen des erfindungsgemäßen Verfahrens erläutert wird, ist die Verarbeitungseinheit 14 dabei ausgebildet, bei der Verarbeitung der Videobilddaten die Blickrichtung 16 des dargestellten ersten Nutzers 5 zu erfassen und in den zweiten Videobilddaten die Wiedergabe eines die Augen umfassenden Bereichs des Kopfes des ersten Nutzers 5 so zu verändern, dass eine Blickrichtung des ersten Nutzers 5 in den veränderten zweiten Videobilddaten so erscheint, als wäre die erste Bildaufnahmevorrichtung 3 auf einer Geraden 18, die durch eines der Augen des ersten Nutzers 5 und durch eines der auf der ersten Anzeigevorrichtung 4 dargestellten Augen des zweiten Nutzers 9 geht.

Auf entsprechende Weise kann die Verarbeitungseinheit 14 die von der zweiten Bildaufnahmevorrichtung 7 aufgenommenen ersten Videobilddaten verarbeiten, so dass die verarbeiteten ersten Videobilddaten von der ersten Anzeigevorrichtung 4 wiedergegeben werden können.

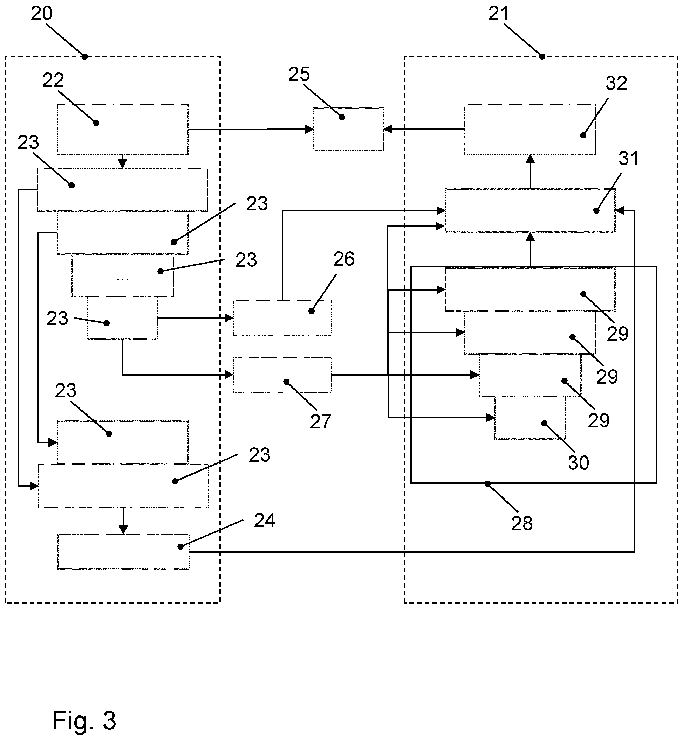

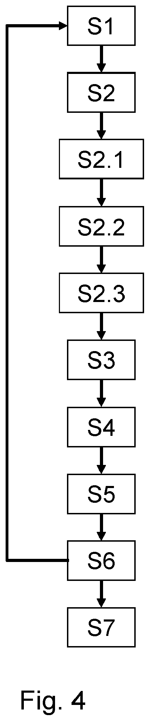

Bei der Verarbeitung der zweiten Videobilddaten durch die Verarbeitungseinheit 14 wird ein trainiertes künstliches neuronales Netz eingesetzt. Im Folgenden wird mit Bezug zu den Figuren 3 und 4 der Aufbau für das Training des künstlichen neuronalen Netzes und der Ablauf dieses Trainings beschrieben:
Das Trainingssystem umfasst einen Trainings-Encoder 20 oder einen Trainings-Decoder 21.

Der Trainings-Encoder 20 weist eine Eingangseinheit 22 für Quell-Trainingsbilder und Ziel-Trainingsbilder auf. Über die Eingangseinheit 22 werden Trainings-Videobilddaten eingespielt, aus denen die Quell-Trainingsbilder und die Ziel-Trainingsbilder extrahiert werden. Die Trainings-Videobilddaten zeigen beispielsweise Aufnahmen einer Person, welche den Kopf dreht, die Blickrichtung der Augen dreht oder andere Bewegungen mit dem Kopf oder den Augen ausführt. Die Ausgangseinzelbilder dieser Trainings-Videobilddaten sind dann die Quell-Trainingsbilder und die Einzelbilder am Ende der Trainings-Videobilddaten sind dann die Ziel-Trainingsbilder, mit denen die von dem künstlichen neuronalen Netz erzeugten Ausgabedarstellungen des Kopfes verglichen werden können.

Der Trainings-Encoder 20 umfasst ferner eine Vielzahl von Trainings-Encoderblöcken 23, welche verschiedene Schichten des künstlichen neuronalen Netzes darstellen. Mit diesen Trainings-Encoderblöcken 23 ist eine Einheit 24 zum Extrahieren der Quell-Trainings-Erscheinungsparameter verbunden. Des Weiteren ist mit einer tieferen Schicht der TrainingsEncoderblöcke 23 eine Einheit 26 zum Gewinnen eines Quell-Trainings-Latenzvektors und einer Einheit 27 zum Gewinnen eines Ziel-Trainings-Latenzvektors verbunden. Die Einheiten 26 und 27 können alternativ von einer Einheit gebildet sein, wobei dann in Abhängigkeit von dem Eingangsbild (Quell-Trainingsbild oder Ziel- Trainingsbild) ein Quell- oder Ziel-Trainings-Latenzvektor erzeugt wird.

Im Training wird der Trainings-Encoder 20 zwei Mal aufgerufen. Einmal mit dem Quell-Trainingsbild und einmal mit dem Ziel-Trainingsbild. Dadurch ist es möglich, den Trainings-Encoder 20 auch beim Ausführen des Verfahrens zu verwenden, d. h. der Trainings-Encoder 20 entspricht dann dem Encoder 33. Beim Ausführen des Verfahrens gibt es zwar kein Zielbild, aber ein Quellbild, aus dem ein Quell-Latenzvektor erzeugt wird.

Der Trainings-Decoder 21 umfasst einen Kopfmodell-Generator 28, der ein weiteres künstliches neuronales Netz umfasst. Der Kopfmodell-Generator 28 umfasst eine Einheit 30 zum Gewinnen von Fourier-Merkmalen und in weiteren Schichten Trainings-Decoderblöcke 29.

Die Einheit 27 zum Gewinnen des Ziel-Trainings-Latenzvektors überträgt den gewonnenen Latenzvektor an die verschiedenen Schichten des Kopfmodell-Generators 28. Dieser ist ausgebildet, anhand des Ziel-Trainings-Latenzvektors ein Kopfmodell zu erzeugen. Anhand dieses Kopfmodells kann eine Trainings-Zwischendarstellung eines in einem Quell-Trainingsbild dargestellten Kopfes erzeugt werden.

Der Kopfmodell-Generator 28 ist mit einer Trainings-Warp-Einheit 31 verbunden, an welche die von dem Kopfmodell-Generator 28 erzeugte Trainings-Zwischendarstellung übertragen wird. Ferner werden die von der Einheit 24 extrahierten Quell-Trainings-Erscheinungsparameter an die Trainings-Warp-Einheit 31 übertragen. Schließlich wird der Ziel-Trainings-Latenzvektor von der Einheit 27 und der Quell-Trainings-Latenzvektor von der Einheit 26 an die Trainings-Warp-Einheit 31 übertragen. Die Trainings-Warp-Einheit 31 ist ausgebildet, eine Trainings-Ausgabedarstellung des Kopfes zu erzeugen, wobei mittels des Quell-Trainings-Latenzvektors, des Ziel-Trainings-Latenzvektors und der Quell-Trainings-Erscheinungsparameter die Trainings-Zwischendarstellung so verändert wird, dass die Trainings-Ausgabedarstellung erzeugt wird. Die Trainings-Warp-Einheit 31 ist mit einer Ausgabeeinheit 32 verbunden.

Des Weiteren umfasst das System eine Einheit 25 zum Bewerten einer Verlustfunktion. Diese Einheit 25 ist zum einen mit der Eingangseinheit 22 verbunden, welche das Ziel-Trainingsbild oder die Ziel-Trainingsbilder an die Einheit 25 überträgt. Ferner ist die Einheit 25 mit der Ausgabeeinheit 32 verbunden, welche die Trainings-Ausgabedarstellung an die Einheit 25 überträgt. Die Einheit 25 ist ausgebildet, eine Verlustfunktion auf der Basis eines Vergleichs der Trainings-Ausgabedarstellung mit einem zugehörigen Ziel-Trainingsbild zu bewerten und die Gewichte des künstlichen neuronalen Netzes des Trainings-Encoders und/oder des künstlichen neuronalen Netzes des Trainings-Decoders 21 zur Annäherung der Trainings-Ausgabedarstellung an das zugehörige Ziel-Trainingsbild zu verändern. Mittels der Einheit 25 können auch die Gewichte des trainierten künstlichen neuronalen Netzes oder der trainierten künstlichen neuronalen Netzes gespeichert werden.

Im Folgenden wird der Ablauf des Trainings erläutert, welches mit dem vorstehend beschriebenen System durchgeführt wird:
In einem Schritt S1 wird ein Quell-Trainingsbild und ein zugeordnetes Ziel-Trainingsbild empfangen. Beispielsweise können das Quell-Trainingsbild und das Ziel-Trainingsbild aus einem Video extrahiert werden, welches zeigt, wie eine Person ihren Kopf von links nach rechts dreht. Das Quell-Trainingsbild stellt in diesem Fall den Anfang der Drehung dar und das Ziel-Trainingsbild stellt das Ende der Drehung dar. Das Quell-Trainingsbild umfasst eine Darstellung eines die Augen umfassenden Bereichs des Kopfes einer Person, insbesondere wird der Kopf einer Person vollständig angezeigt. Das Ziel-Trainingsbild umfasst die in dem Quell-Trainingsbild dargestellte Person mit einer veränderten Ziel-Blickrichtung und/oder einer veränderten Ziel-Pose des Kopfes der Person.

In einem Schritt S2 wird das Quell-Trainingsbild in dem Trainings-Encoder 20 mittels des künstlichen neuronalen Netzes verarbeitet. Bei dieser Verarbeitung werden folgende Unterschritte ausgeführt:
In einem Unterschritt S 2.1 werden Quell-Trainings-Erscheinungsparameter des in dem Quell-Trainingsbild dargestellten Kopfes extrahiert, wobei die Quell-Trainings-Erscheinungsparameter die Erscheinung des Kopfes spezifizieren.

In einem Unterschritt S 2.2 wird aus dem Quell-Trainingsbild ein Quell-Trainings-Latenzvektor eines Latenzraums gewonnen, wobei der Quell-Trainings-Latenzvektor zumindest eine Quell-Pose und/oder eine Quell-Blickrichtung der Augen des in dem Quell-Trainingsbild dargestellten Kopfes repräsentiert.

In einem Unterschritt S 2.3 wird aus dem Ziel-Trainingsbild ein Ziel-Trainings-Latenzvektor des Latenzraums gewonnen, wobei der Ziel-Trainings-Latenzvektor zumindest die Ziel-Pose und/oder die Ziel-Blickrichtung der Augen des in dem Ziel-Trainingsbild dargestellten Kopfes repräsentiert.

Anschließend wird in einem Schritt S3 eine Trainings-Zwischendarstellung des Quell-Trainingsbildes mit der im Unterschritt S 2.3 gewonnenen Ziel-Pose und/oder mit der im Unterschritt S 2.3 gewonnenen Ziel-Blickrichtung in dem Trainings-Decoder 21 mittels des Kopfmodells anhand des Ziel-Trainings-Latenzvektors von dem Kopfmodell-Generator 28 erzeugt.

Im Schritt S4 wird die im Schritt S3 erzeugte Trainings-Zwischendarstellung des Kopfes mittels der Trainings-Warp-Einheit 31 in dem Trainings-Decoder 21 verarbeitet und eine Trainings-Ausgabedarstellung des Kopfes erzeugt. Dabei wird mittels des Quell-Trainings-Latenzvektors, des Ziel-Trainings-Latenzvektors und der Quell-Trainings-Erscheinungsparameter die Trainings-Zwischendarstellung so verändert, dass die Trainings-Ausgabedarstellung erzeugt wird.

Diese Trainings-Ausgabedarstellung wird dann im Schritt S5 bewertet, und zwar anhand einer Verlustfunktion auf Basis eines Vergleichs der Trainings-Ausgabedarstellung mit dem zugehörigen Ziel-Trainingsbild. In der Einheit 25 werden dann die Gewichte des künstlichen neuronalen Netzes des Trainings-Encoders 20 und des künstlichen neuronalen Netzes des Kopfmodell-Generators 28 des Trainings-Decoders 21 so verändert, dass es zu einer Annäherung der Trainings-Ausgabedarstellung an das zugehörige Ziel-Trainingsbild kommt.

In einem Schritt S6 werden die Schritte S1 bis S5 wiederholt, bis die Bewertung der Verlustfunktion im Schritt S5 ergibt, dass der Unterschied von der Trainings-Ausgabedarstellung zu dem zugehörigen Ziel-Trainingsbild unterhalb eines Schwellwerts liegt. Wenn dieser Schwellwert unterschritten ist, werden die Gewichte des trainierten künstlichen neuronalen Netzes bzw. der trainierten künstlichen neuronalen Netze gespeichert, sodass diese trainierten künstlichen neuronalen Netze bei einer Echtzeitverarbeitung von Videobilddaten eingesetzt werden können.

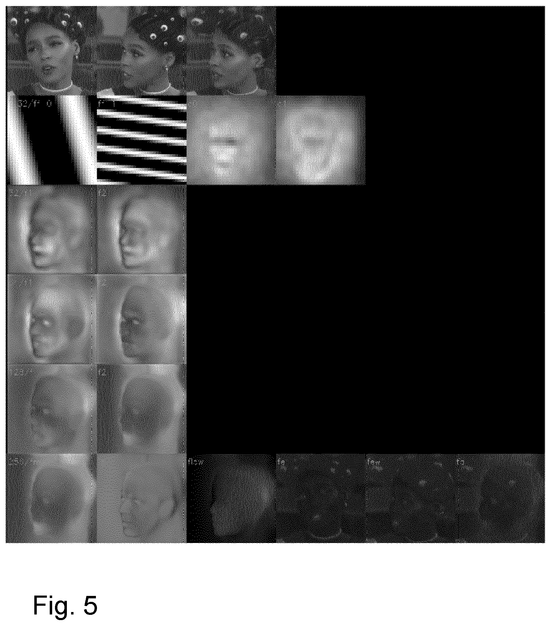

In der Figur 5 ist die Veränderung eines Trainingsbildes in dem Trainings-Decoder 21 gezeigt.

In der obersten Zeile ist das Quell-Trainingsbild, in der Mitte das Ziel-Trainingsbild und auf der rechten Seite das durch das Verfahren erzeugte Bild der Trainings-Ausgabedarstellung gezeigt.

Die Bilder in den Zeilen 2 bis 6 veranschaulichen Veränderungen des Trainingsbildes, wobei die Auflösung der Bilder nach unten hin zunimmt.

Die zweite Zeile veranschaulicht die Sinuswellen der Fourier-Merkmale, wie sie von der Einheit 30 gewonnen werden. Die Bilder in den Zeilen 3 bis 5 zeigen die Verarbeitung durch die Trainings-Decoderblöcke 29. In den Zeilen 2 bis 5 werden somit Bilder bei der Verarbeitung durch das neuronale Netz des Kopfmodell-Generators 28 gezeigt. Das Kopfmodell wird auf Basis eines Latenzvektors der Dimension 64 erzeugt, wobei die Pose des Kopfes, die Kopfform und der Gesichtsausdruck rekonstruiert werden.

Die Bilder in der letzten Zeile unten zeigen dann die Verarbeitung mittels der Trainings-Warp-Einheit 31. Die Bilder werden auf Basis der extrahierten Quell-Trainings-Erscheinungsparameter, die von der Einheit 24 gewonnen werden, des Quell-Trainings-Latenzvektors, der von der Einheit 26 gewonnen wird, und des Ziel-Trainings-Latenzvektors, der von der Einheit 27 gewonnen wird, erzeugt. Hierbei werden dem Bild Farben hinzugefügt, beispielsweise die Augenfarbe, die Haarfarbe und die Gesichtsfarbe. Ferner werden Ergänzungen von schwarzen Bereichen hinzugefügt, welche durch beispielsweise die Drehung des Kopfes entstehen.

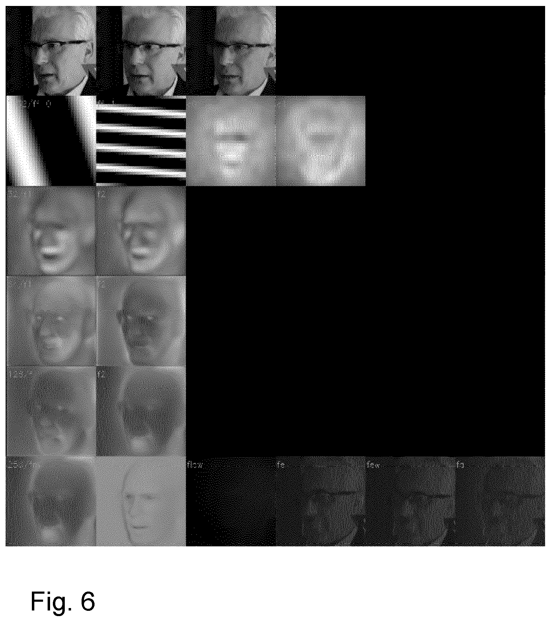

Analog zu der Darstellung der Figur 5 zeigt die Figur 6 weitere Beispielbilder, die durch die Verarbeitung in dem Trainings-Decoder 21 erzeugt wurden. Es zeigt sich, dass das Kopfmodell auch in der Lage ist, Darstellungen von Köpfen mit einer Brille und mit Haaren zu erlernen.

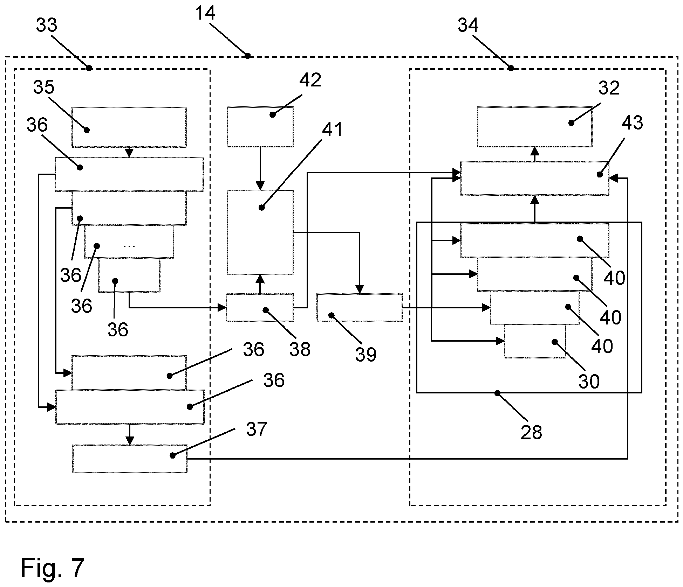

Mit Bezug zu Figur 7 wird der Aufbau der Verarbeitungseinheit 14, welche bei dem erfindungsgemäßen Videokonferenzsystem eingesetzt wird, erläutert.

Der Aufbau der Verarbeitungseinheit 14 entspricht im Wesentlichen dem Aufbau des Systems zum Training der neuronalen Netze, wie es mit Bezug zu Figur 3 erläutert worden ist. Dabei entspricht ein Encoder 33 dem Trainings-Encoder 20, ein Decoder 34 dem Trainings-Decoder 21, die Encoderblöcke 36 den Trainings-Encoderblöcken 23, die Decoderblöcke 40 den Trainings-Decoderblöcken 29, die Einheit 37 zum Extrahieren der Quell-Erscheinungsparameter der Einheit 24 zum Extrahieren der Quell-Trainings-Erscheinungsparameter, die Einheit 38 zum Gewinnen des Quell-Latenzvektors der Einheit 26 zum Gewinnen des Quell-Trainings-Latenzvektors und die Einheit 39 zum Gewinnen des Ziel-Latenzvektors der Einheit 27 zum Gewinnen des Ziel-Trainings-Latenzvektors. Im Folgenden wird daher nur auf die Unterschiede zu dem mit Bezug zu Figur 3 beschriebenen System eingegangen:
Die Verarbeitungseinheit 14 umfasst eine Eingangseinheit 35 für die zweiten Videobilddaten. In diesem Fall werden somit nur Quell-Videobilddaten empfangen und keine Ziel-Videobilddaten.

Die Zieldaten werden vielmehr in einer Einheit 42 gewonnen. Die Einheit 42 gewinnt insbesondere eine Ziel-Blickrichtung und/oder eine Ziel-Pose für die Darstellung des Kopfes in den verarbeiteten zweiten Videobilddaten. Die Ziel-Blickrichtung und/oder die Ziel-Pose wird dabei aus der Position 15 eines Auges des ersten Nutzers und der Position 17 der Darstellung eines Auges eines zweiten Nutzers auf der ersten Anzeigevorrichtung 4 so berechnet, dass die Blickrichtung bzw. die Pose so erscheinen, als wäre die erste Bildaufnahmevorrichtung 3 auf der Geraden 18 angeordnet, die durch ein Auge des ersten Nutzers 5 und durch ein auf der ersten Anzeigevorrichtung 4 dargestelltes Auge des zweiten Nutzers 9 geht.

Die Einheit 42 ist mit einer Blickrichtungs-Verarbeitungseinheit 41 verbunden. Die Blickrichtungs-Verarbeitungseinheit 41 ist ferner mit der Einheit 38 verbunden. Die Blickrichtungs-Verarbeitungseinheit 41 ist ausgebildet aus dem Quell-Latenzvektor, welcher von der Einheit 38 übertragen wird, und der Ziel-Blickrichtung und/oder der Ziel-Pose des Kopfes, welche von der Einheit 42 übertragen werden, ein Ziel-Latenzvektor des Latenzraums so zu berechnen, dass der Ziel-Latenzvektor zumindest die Ziel-Blickrichtung und/oder die Ziel-Pose des Kopfes repräsentiert. Der Ziel-Latenzvektor wird von der Einheit 41 an die Einheit 39 zum Gewinnen des Ziel-Latenzvektors übertragen. Im Unterscheid zum Trainingssystem der Figur 3 wird somit der Ziel-Latenzvektor nicht aus einem Ziel-Trainingsbild gewonnen, sondern aus der Geometrie des Kopfes des ersten Nutzers und der Darstellung eines Auges oder der Augen des zweiten Nutzers 9 auf der ersten Anzeigevorrichtung 4.

Wie bei dem Trainingssystem der Figur 3 ist die Einheit 38 zum Gewinnen des Quell-Latenzvektors mit der Warp-Einheit 31 verbunden und die Einheit 39 zum Gewinnen des Ziel-Latenzvektors mit dem Kopfmodell-Generator 28 sowie auch der Warp-Einheit 31. Des Weiteren ist auch die Einheit 37 zum Extrahieren der Quell-Erscheinungsparameter mit der Warp-Einheit 31 verbunden. Die Warp-Einheit 31 ist wiederum mit der Ausgabeeinheit 32 verbunden, über welche die Ausgabedarstellung des Kopfes für die verarbeiteten zweiten Videobilddaten ausgegeben wird.

Im Folgenden wird ein Ausführungsbeispiel des erfindungsgemäßen Verfahrens erläutert, wobei des Weiteren die Ausbildung des erfindungsgemäßen Videokonferenzsystems, insbesondere der Verarbeitungseinheit 14, näher beschrieben wird.

In einem Schritt V1 wird der Kopf des ersten Nutzers 5 von der ersten Bildaufnahmevorrichtung 3 aufgenommen. Gleichzeitig werden in einem Schritt V2 von der ersten Anzeigevorrichtung 4 erste Videobilddaten wiedergegeben, welche eine Darstellung des Kopfes des zweiten Nutzers 9 umfassen. Diese ersten Videobilddaten werden von der zweiten Bildaufnahmevorrichtung 7 aufgenommen und ggf. von der Verarbeitungseinheit 14 geändert. Die von der ersten Anzeigevorrichtung 4 angezeigten ersten Videobilddaten zeigen ein Auge des zweiten Nutzers 9 bei der Position 17 (siehe Fig. 2).

In einem Schritt V3 werden die von der ersten Bildaufnahmevorrichtung 3 aufgenommenen zweiten Videobilddaten über die Datenverbindung 10 an die Verarbeitungseinheit 14 übertragen.

In einem Schritt V4 wird die Darstellung des Kopfes des ersten Nutzers 5 in den von der Verarbeitungseinheit 14 empfangenen zweiten Videobilddaten extrahiert. Dabei wird der in den zweiten Videobilddaten dargestellte Kopf des ersten Nutzers 5 erkannt.

In einem Schritt V5 wird die Pose und die Blickrichtung 16 des ersten Nutzers 5 anhand der extrahierten Darstellung des Kopfes erfasst. Unter der Pose des Kopfes wird die räumliche Lage des Kopfes verstanden, d. h. die Kombination aus der Position und der Orientierung des Kopfes. Allein aus der Pose kann die Blickrichtung des ersten Nutzers 5 ermittelt werden. Alternativ können hierfür an sich bekannte Eye-Tracking-Verfahren verwendet werden.

In einem Schritt V6 wird die aktuelle Position 17 der Darstellung eines Auges des zweiten Nutzers 9 auf der ersten Anzeigevorrichtung 4 ermittelt. Alternativ kann auch der Mittelpunkt zwischen der Darstellung der beiden Augen des zweiten Nutzers 9 als Punkt 17 bestimmt werden. Ferner wird die Ausrichtung der Geraden 18 berechnet, welche durch die Position 15 eines Auges der ersten Nutzers 5 und die Position 17 geht. Auch in diesem Fall könnte die Position 15 alternativ als der Mittelpunkt zwischen den beiden Augen des ersten Nutzers 5 definiert werden.

Anschließend wird in einem Schritt V7 eine Ziel-Blickrichtung für veränderte bzw. verarbeitete zweite Videobilddaten in der Darstellung des ersten Nutzers 5 berechnet. Die Ziel-Blickrichtung wird dabei so bestimmt, dass der dargestellte erste Nutzer 5 in den veränderten zweiten Videobilddaten so erscheint, als wäre die erste Bildaufnahmevorrichtung 3 auf der Geraden 18 angeordnet, insbesondere bei der Position 17, oder auf der Geraden 18 hinter der ersten Anzeigevorrichtung 4.

Anschließend wird die Darstellung des erkannten Kopfes in dem Encoder 33 mittels des trainierten künstlichen neuronalen Netzes verarbeitet. Das Training dieses künstlichen neuronalen Netzes erfolgt wie es vorstehend beschrieben wurde. Die Encoderblöcke 36 entspreche dabei den Trainings-Encoderblöcken 23 mit den in dem Training gewonnenen Gewichten. Dabei werden folgende Schritte ausgeführt:
In einem Schritt V8 werden Quell-Erscheinungsparameter des dargestellten Kopfes extrahiert, wobei die Quell-Erscheinungsparameter des Kopfes die Erscheinung des Kopfes spezifizieren, wie es vorstehend erläutert wurde.

In einem Schritt V9 wird ein Quell-Latenzvektor des Latenzraums gewonnen. Der Quell-Latenzvektor wird von der Einheit 38, die der Einheit 26 entspricht, mittels des künstlichen neuronalen Netzes des Encoders 33 gewonnen. Der Quell-Latenzvektor repräsentiert zumindest die Pose des Kopfes und/oder die Blickrichtung der Augen des Kopfes, wie er in dem Encoder 33 extrahiert wurde.

In einem Schritt V10 wird aus dem Quell-Latenzvektor und der Ziel-Blickrichtung und/oder der Ziel-Pose des Kopfes mit der Einheit 42 und der Blickrichtungs-Verarbeitungseinheit 41 ein Ziel-Latenzvektor des Latenzraums so berechnet, dass der Ziel-Latenzvektor zumindest die Ziel-Blickrichtung und/oder die Ziel-Pose des Kopfes repräsentiert. Der Ziel-Latenzvektor wird an die Einheit 39 übertragen.

Anschließend wird in einem Schritt V11 eine Zwischendarstellung des erkannten Kopfes mit der im Schritt V10 gewonnenen Ziel-Pose und/oder mit der im Schritt V10 gewonnenen Ziel-Blickrichtung in dem Decoder 34 mittels eines Kopfmodells anhand des Ziel-Latenzvektors erzeugt. Die Zwischendarstellung wird von dem Kopfmodell-Generator 28 erzeugt, welcher die Ziel-Pose bzw. die Ziel-Blickrichtung und den Ziel-Latenzvektor dafür verwendet.

In einem Schritt V12 wird die im Schritt V11 erzeugte Zwischendarstellung des Kopfes von der Warp-Einheit 43, die der Trainings-Warp-Einheit 31 entspricht, in dem Decoder 34 verarbeitet. Dabei wird eine Ausgabedarstellung des Kopfes für die verarbeiteten zweiten Videobilddaten mittels des Quell-Latenzvektors, des Ziel-Latenzvektors und der Quell-Erscheinungsparameter erzeugt.

In einem Schritt V13 werden anschließend die verarbeiteten, das heißt veränderten, zweiten Videobilddaten mittels der erzeugten Ausgabedarstellung generiert. Dabei wird eine Darstellung des erkannten Kopfes mit einer so veränderten Pose generiert, dass die Blickrichtung des Kopfes in der veränderten Pose die Ziel-Blickrichtung ist. Die Ziel-Blickrichtung ist dabei so gewählt, dass der in den verarbeiteten zweiten Videobilddaten dargestellte Kopf des ersten Nutzers 5 so erscheint, als wäre die erste Bildaufnahmevorrichtung 3 auf einer Geraden 18 angeordnet, die durch einen ersten Umgebungsbereich der Augen des ersten Nutzers 5 und durch einen zweiten Umgebungsbereich der auf der ersten Anzeigevorrichtung 4 dargestellten Augen des zweiten Nutzers 9 geht. Die veränderte Pose des Kopfes wird dabei durch eine Transformation der Darstellung des in den zweiten Videobilddaten erkannten Kopfes berechnet. Dabei werden nur Pixel berücksichtigt, welche den Kopf darstellen. Pixel, die zum Hintergrund gehören, bleiben unberücksichtigt.

In einem Schritt V14 werden in den verarbeiteten zweiten Videobilddaten Bildinhalte ergänzt, die bei der Darstellung des erkannten Kopfes verdeckt waren und bei der Darstellung des Kopfes in der veränderten Pose sichtbar geworden sind. Insbesondere können Hintergrundbereiche sichtbar werden, welche ergänzt werden müssen. Ferner werden durch die Drehung des Kopfes Kopfbereiche sichtbar, die bei der ursprünglichen Darstellung des Kopfes nicht sichtbar waren. Diese Bildinhalte werden durch an sich bekannte Verfahren erzeugt und hinzugefügt. In diesem Fall können vorteilhafterweise auch Forward-Warping-Techniken oder Backward-Warping-Techniken eingesetzt werden, um die verarbeiteten zweiten Videobilddaten zu erzeugen.

In einem Schritt V15 werden von der Verarbeitungseinheit 14 die veränderten zweiten Videobilddaten über die Datenverbindung 13 an die zweite Anzeigevorrichtung 8 übertragen, welche die veränderten Videobilddaten wiedergibt. Diese können dann von dem zweiten Nutzer 9 betrachtet werden. Die Blickrichtung der Darstellung des ersten Nutzers 5 auf der zweiten Anzeigevorrichtung 8 erscheint dann in einer Weise, als wäre der zweite Nutzer 9 mit einem seiner Augen bei der Position 17 gegenüber dem ersten Nutzer 5. Es wird somit eine sehr realitätsnahe Darstellung des ersten Nutzers 5 auf der zweiten Anzeigevorrichtung 8 erzeugt. Wenn der erste Nutzer 5 in diesem Fall direkt auf die Darstellung eines Auges des zweiten Nutzers 9 bei der Position 17 blickt, ergibt sich auch bei der Darstellung des ersten Nutzers 5 auf der zweiten Anzeigevorrichtung 8 ein Blickkontakt mit dem zweiten Nutzer 9. Auch wenn die Blickrichtung 16 des ersten Nutzers 5 auf eine andere Position der ersten Anzeigevorrichtung 4 oder auch außerhalb der ersten Anzeigevorrichtung 4 gerichtet ist, wird diese Blickrichtung von der zweiten Anzeigevorrichtung 8 so wiedergegeben, als wäre die erste Bildaufnahmevorrichtung bei dem dargestellten Auge des zweiten Nutzers 9 angeordnet.

In einem weiteren Ausführungsbeispiel des erfindungsgemäßen Verfahrens wird das vorstehend beschriebene Ausführungsbeispiel um folgende Schritte ergänzt:
Es nicht nur die Pose und die Blickrichtung in der Darstellung des erkannten Kopfes erfasst, sondern es werden auch Augenbewegungen des erkannten Kopfes des ersten Nutzers 5, der in den zweiten Videobilddaten dargestellt ist, erfasst. Beim Generieren der Darstellung des in den zweiten Videobilddaten erkannten Kopfes mit einer veränderten Pose werden die erfassten Augenbewegungen relativ zu der Ziel-Blickrichtung so transformiert, dass sie erhalten bleiben.

Die Augenbewegungen, die der erste Nutzer 5 relativ zu der Blickrichtung des erkannten Kopfes ausführt, werden bei den verarbeiteten zweiten Videobilddaten relativ zu der Ziel-Blickrichtung ausgeführt.

Die von der ersten Bildaufnahmevorrichtung 3 aufgenommenen Videobilddaten sind in aufeinander folgende Videoframes unterteilt. Die Schritte des vorstehend beschriebenen Verfahrens werden für jeden aufeinanderfolgenden Videoframe ausgeführt, so dass fortlaufende Videobilder erzeugt werden.

Bei dem Ausführungsbeispiel des erfindungsgemäßen Verfahrens kann sich bei der aufeinanderfolgenden Wiedergabe der Videoframes eine Darstellung von einer Blickrichtungsänderung, z. B. des ersten Nutzers 5, z. B. zu einem anderen Gesprächsteilnehmer, ergeben. Eine solche Blickrichtungsänderung wird von der Verarbeitungseinheit 14 in den aufgenommenen Videobilddaten erkannt. In diesem Fall werden dann einige Videoframes so interpoliert, dass die von den veränderten Videobilddaten wiedergegebene Blickrichtungsänderung verlangsamt ist.
In einem weiteren Ausführungsbeispiel des erfindungsgemäßen Verfahrens wird nicht nur die Blickrichtung 16 des ersten Nutzers 5 erfasst, sondern auch ermittelt, welches Objekt aktuell bei dem Schnittpunkt der Blickrichtung 16 mit der ersten Anzeigevorrichtung 4 dargestellt wird, sofern die Blickrichtung 16 auf die erste Anzeigevorrichtung 4 trifft. Dieses Objekt kann die Verarbeitungseinheit 14 anhand der Videobilddaten ermitteln, welche sie an die erste Anzeigevorrichtung 4 über die Datenverbindung 12 überträgt. Wenn ermittelt worden ist, dass das Objekt die Darstellung des Gesichts des zweiten Nutzers 9 ist, wird bei der Verarbeitung der Videobilddaten die Ziel-Blickrichtung des in den veränderten Videobilddaten dargestellten ersten Nutzers 5 so bestimmt, dass der erste Nutzer 5 das auf der ersten Anzeigevorrichtung dargestellte Gesicht des zweiten Nutzers in gleicher Weise betrachtet.

Wenn hingegen nicht ermittelt werden kann, welcher Bereich der Darstellung des Gesichts von dem ersten Nutzer 5 betrachtet wird, wird bei der Verarbeitung der Videobilddaten die Ziel-Blickrichtung des in den veränderten Videobilddaten dargestellten ersten Nutzers so bestimmt, dass der erste Nutzer 5 ein auf der ersten Anzeigevorrichtung 4 dargestelltes Auge des zweiten Nutzers 9 betrachtet.

Wenn in diesem Fall von der ersten Anzeigevorrichtung 4 Videobilddaten wiedergegeben werden, die mehrere Personen, z. B. mehrere zweite Nutzer, umfassen, wird bei diesem Ausführungsbeispiel unterschieden, welchen dieser dargestellten Nutzer der erste Nutzer 5 betrachtet. Die verschiedenen zweiten Nutzer können gemeinsam von der zweiten Bildaufnahmevorrichtung 7 oder von separaten zweiten Bildaufnahmevorrichtungen aufgenommen werden. Es wird dann ermittelt, ob das Objekt die Darstellung des Gesichts eines bestimmten der mehreren zweiten Nutzer ist. Bei der Verarbeitung der Videobilddaten erscheint die Ziel-Blickrichtung des in den veränderten Videobilddaten dargestellten ersten Nutzers 5 dann so, als wäre die erste Bildaufnahmevorrichtung 3 auf der Geraden angeordnet, die durch eines der Augen des ersten Nutzers 5, d. h. durch die Position 15, geht und ferner durch eines der dargestellten Augen des bestimmten der mehreren zweiten Nutzer geht. Die Veränderung der Videobilddaten sorgt dafür, dass der dargestellte Gesprächspartner, auf den die Blickrichtung 16 des ersten Nutzers 5 gerichtet ist, sieht, dass er angeschaut wird, wohingegen die anderen zweiten Nutzer sehen, dass sie nicht angeschaut werden.

### Bezugszeichenliste

- 1: Videokonferenzsystem
- 2: erste Videokonferenzeinrichtung
- 3: erste Bildaufnahmevorrichtung
- 4: erste Anzeigevorrichtung
- 5: erster Nutzer
- 6: zweite Videokonferenzeinrichtung
- 7: zweite Bildaufnahmevorrichtung
- 8: zweite Anzeigevorrichtung
- 9: zweiter Nutzer
- 10: Datenverbindung
- 11: Datenverbindung
- 12: Datenverbindung
- 13: Datenverbindung
- 14: Verarbeitungseinheit
- 15: Position eines Auges des ersten Nutzers
- 16: Blickrichtung
- 17: Position der Darstellung eines Auges des zweiten Nutzers
- 18: Gerade
- 19: Aufnahmerichtung
- 20: Trainings-Encoder
- 21: Trainings-Decoder
- 22: Eingangseinheit für Quell-Trainingsbild und Ziel-Trainingsbild
- 23: Trainingsencoderblöcke
- 24: Einheit zum Extrahieren der Quell-Trainings-Erscheinungsparameter
- 25: Einheit zum Bewerten der Verlustfunktion
- 26: Einheit zum Gewinnen des Quell-Trainings-Latenzvektors
- 27: Einheit zum Gewinnen des Ziel-Trainings-Latenzvektors
- 28: Kopfmodell-Generator
- 29: Trainingsdecoderblöcke
- 30: Einheit zum Gewinnen von Fouriermerkmalen
- 31: Trainings-Warp-Einheit
- 32: Ausgabeeinheit
- 33: Encoder
- 34: Decoder
- 35: Eingangseinheit für zweite Videobilddaten
- 36: Encoderblöcke
- 37: Einheit zum Extrahieren der Quell-Erscheinungsparameter
- 38: Einheit zum Gewinnen des Quell-Latenzvektors
- 39: Einheit zum Gewinnen des Ziel-Latenzvektors
- 40: Decoderblöcke
- 41: Blickrichtungs-Verarbeitungseinheit
- 42: Einheit zum Gewinnen der Ziel-Blickrichtung und/oder eine Ziel-Pose
- 43: Warp-Einheit

## Patentansprüche

1. Videokonferenzverfahren, bei dem
mit einer ersten Videokonferenzeinrichtung (2) erste Videobilddaten mittels einer ersten Anzeigevorrichtung (4) wiedergegeben werden und von einer ersten Bildaufnahmevorrichtung (3) zweite Videobilddaten aufgenommen werden, die zumindest einen die Augen umfassenden Bereich des Kopfes eines ersten Nutzers (5) in einer Position umfassen, bei welcher der erste Nutzer (5) die von der ersten Anzeigevorrichtung (4) wiedergegebenen ersten Videobilddaten betrachtet, wobei die von der ersten Anzeigevorrichtung (4) wiedergegebenen ersten Videobilddaten zumindest eine Darstellung der Augen eines zweiten Nutzers (9) umfassen, die von einer zweiten Bildaufnahmevorrichtung (7) einer zweiten Videokonferenzeinrichtung (6) aufgenommen werden, die entfernt von der ersten Videokonferenzeinrichtung (2) angeordnet ist;
von einer Verarbeitungseinheit (14) die von der ersten Bildaufnahmevorrichtung (3) aufgenommenen zweiten Videobilddaten empfangen und verarbeitet werden und die verarbeiteten zweiten Videobilddaten an eine zweite Anzeigevorrichtung (8) der zweiten Videokonferenzeinrichtung (6) übertragen und von dieser wiedergegeben werden,
wobei in den verarbeiteten zweiten Videobilddaten anhand einer Ziel-Blickrichtung und/oder einer Ziel-Pose eine Ausgabedarstellung des Kopfes mit einer Blickrichtung und/oder einer Pose so berechnet wird, dass die Blickrichtung und/oder Pose so erscheint, als wäre die erste Bildaufnahmevorrichtung (3) auf einer Geraden (18) angeordnet, die durch einen ersten Umgebungsbereich der Augen des ersten Nutzers (5) und durch einen zweiten Umgebungsbereich der auf der ersten Anzeigevorrichtung (4) dargestellten Augen des zweiten Nutzers (9) geht,
**dadurch gekennzeichnet, dass**
bei der Verarbeitung der zweiten Videobilddaten durch die Verarbeitungseinheit (14) folgende Schritte durchgeführt werden:
a. Erkennen des in den zweiten Videobilddaten dargestellten Kopfes des ersten Nutzers (5);
b. Verarbeiten der Darstellung des im Schritt a. erkannten Kopfes in einem Encoder (33) mittels eines trainierten künstlichen neuronalen Netzes, wobei durch die Verarbeitung:
b1. Quell-Erscheinungsparameter des dargestellten Kopfes extrahiert werden, wobei die Quell-Erscheinungsparameter des Kopfes die Erscheinung des Kopfes spezifizieren,
b2. ein Quell-Latenzvektor eines Latenzraums gewonnen wird, wobei der Quell-Latenzvektor zumindest die Pose des Kopfes und/oder die Blickrichtung (16) der Augen des Kopfes repräsentiert, und
b3. aus dem Quell-Latenzvektor und der Ziel-Blickrichtung und/oder der Ziel-Pose des Kopfes mit einer Blickrichtungs-Verarbeitungseinheit ein Ziel-Latenzvektor des Latenzraums so berechnet wird, dass der Ziel-Latenzvektor zumindest die Ziel-Blickrichtung und/oder die Ziel-Pose des Kopfes repräsentiert,
c. Erzeugen einer Zwischendarstellung des im Schritt a. erkannten Kopfes mit der im Schritt b.3. gewonnenen Ziel-Pose und/oder mit der im Schritt b.3. gewonnenen Ziel-Blickrichtung in einem Decoder mittels eines Kopfmodells anhand des Ziel-Latenzvektors;
d. Verarbeiten der im Schritt c. erzeugten Zwischendarstellung des Kopfes von einer Warp-Einheit in dem Decoder zum Erzeugen der Ausgabedarstellung des Kopfes für die verarbeiteten zweiten Videobilddaten mittels des Quell-Latenzvektors, des Ziel-Latenzvektors und der Quell-Erscheinungsparameter.

2. Videokonferenzverfahren nach Anspruch 1, **dadurch gekennzeichnet, dass**
die Quell-Erscheinungsparameter des Kopfes Farbmerkmale der Darstellung des Kopfes umfassen.

3. Videokonferenzverfahren nach Anspruch 1 oder 2, **dadurch gekennzeichnet, dass**
der Quell-Latenzvektor und/oder der Ziel-Latenzvektor ferner zumindest die Gesichtsform, den Gesichtsausdruck, gegebenenfalls eine Brille und/oder eine Haarstruktur des Kopfes repräsentiert.

4. Videokonferenzverfahren nach einem der vorhergehenden Ansprüche, **dadurch gekennzeichnet, dass**
der Quell-Latenzvektor 128 Variablen oder weniger umfasst.

5. Videokonferenzverfahren nach einem der vorhergehenden Ansprüche, bei dem das künstliche neuronale Netz durch folgende Schritte trainiert wurde:
S1. Empfangen eines Quell-Trainingsbilds und eines zugeordneten Ziel-Trainingsbilds, wobei das Quell-Trainingsbild eine Darstellung eines die Augen umfassenden Bereich des Kopfes einer Person umfasst und wobei das Ziel-Trainingsbild die in dem Quell-Trainingsbild dargestellte Person mit einer veränderten Ziel-Blickrichtung und/oder einer veränderten Ziel-Pose des Kopfes der Person umfasst,
S2. Verarbeiten des Quell-Trainingsbilds in einem Trainings-Encoder (20) mittels des künstlichen neuronalen Netzes, wobei durch die Verarbeitung:
S2.1. Quell-Trainings-Erscheinungsparameter des in dem Quell-Trainingsbild dargestellten Kopfes extrahiert werden, wobei die Quell-Trainings-Erscheinungsparameter die Erscheinung des Kopfes spezifizieren,
S2.2. aus dem Quell-Trainingsbild ein Quell-Trainings-Latenzvektor (zs) des Latenzraums gewonnen wird, wobei der Quell-Trainings-Latenzvektor zumindest eine Quell-Pose und/oder eine Quell-Blickrichtung (16) der Augen des in dem Quell-Trainingsbild dargestellten Kopfes repräsentiert, und
S2.3. aus dem Ziel-Trainingsbild ein Ziel-Trainings-Latenzvektor (zs) des Latenzraums gewonnen wird, wobei der Ziel-Trainings-Latenzvektor zumindest die Ziel-Pose und/oder die Ziel-Blickrichtung der Augen des in dem Ziel-Trainingsbild dargestellten Kopfes repräsentiert,
S3. Erzeugen einer Trainings-Zwischendarstellung des Quell-Trainingsbilds mit der im Schritt S2.3 gewonnenen Ziel-Pose und/oder mit der im Schritt S2.3. gewonnenen Ziel-Blickrichtung in einem Trainings-Decoder (21) mittels des Kopfmodells anhand des Ziel-Trainings-Latenzvektors;
S4. Verarbeiten der im Schritt S3. erzeugten Trainings-Zwischendarstellung des Kopfes mittels einer Trainings-Warp-Einheit in dem Trainings-Decoder (21) zum Erzeugen einer Trainings-Ausgabedarstellung des Kopfes, wobei mittels des Quell-Trainings-Latenzvektors, des Ziel-Trainings-Latenzvektors und der Quell-Trainings-Erscheinungsparameter die Trainings-Zwischendarstellung so verändert wird, dass die Trainings-Ausgabedarstellung erzeugt wird,
S5. Bewerten einer ersten Verlustfunktion auf der Basis eines Vergleichs der Trainings-Ausgabedarstellung mit dem zugehörigen Ziel-Trainingsbild und Verändern von Gewichten des künstlichen neuronalen Netzes zur Annäherung der Trainings-Ausgabedarstellung an das zugehörige Ziel-Trainingsbild,
S6. Wiederholen der Schritte S1. bis S5. zum Erzeugen des trainierten künstlichen neuronalen Netzes und
S7. Speichern der Gewichte des trainierten künstlichen neuronalen Netzes.

6. Videokonferenzverfahren nach Anspruch 5, **dadurch gekennzeichnet, dass**
der Quell-Trainings-Latenzvektor und der zugeordnete Ziel-Trainings-Latenzvektor interpolierbar sind, so dass eine allmähliche Veränderung von dem Quell-Trainings-Latenzvektor an den zugeordneten Ziel-Trainings-Latenzvektor eine allmähliche Veränderung von dem Quell-Trainingsbild an das zugeordnete Ausgabe-Trainingsbild erzeugt.

7. Videokonferenzverfahren nach einem der vorhergehenden Ansprüche, **dadurch gekennzeichnet, dass**
die Blickrichtungs-Verarbeitungseinheit (41) zumindest von einem weiteren künstlichen neuronalen Netz gebildet ist.

8. Videokonferenzverfahren nach Anspruch 7, bei dem das weitere künstliche neuronale Netz durch folgende Schritte trainiert wurde:
T1. Aufnehmen eines Blickrichtungs-Videos einer Person, welche den Kopf dreht,
T2. Erzeugen von aufeinanderfolgenden Einzelbildern des Blickrichtungs-Videos,
T3. Berechnen eines Blickrichtungs-Latenzvektors für jedes Einzelbild,
T4. Trainieren eines Blickrichtungs-Kopfmodels mittels einer zweiten Verlustfunktion auf der Basis eines Vergleichs eines Einzelbilds und eines darauffolgenden Einzelbilds,
T5. Wiederholen des Schritts T4. für aufeinanderfolgende Einzelbilder zum Erzeugen des weitere trainierten künstlichen neuronalen Netzes und
T6. Speichern des weitere trainierten künstlichen neuronalen Netzes.

9. Videokonferenzverfahren nach einem der vorhergehenden Ansprüche, **dadurch gekennzeichnet, dass**
das Kopfmodell von einer Komponente des Decoders des künstlichen neuronalen Netzes gebildet ist.

10. Videokonferenzverfahren nach Anspruch 9, **dadurch gekennzeichnet, dass**
beim Erzeugen der Zwischendarstellung durch das künstliche neuronale Netz Fouriermerkmale als Ausgangsblock verwendet werden.

11. Videokonferenzverfahren nach einem der vorhergehenden Ansprüche, **dadurch gekennzeichnet, dass**
die Warp-Einheit eine Backward-Warp-Technik durchführt.

12. Videokonferenzverfahren nach einem der vorhergehenden Ansprüche, **dadurch gekennzeichnet, dass**
die Warp-Einheit ferner ein faltendes neuronales Netzwerk umfasst.

13. Videokonferenzsystem (1) mit
einer ersten Videokonferenzeinrichtung (2), die eine erste Anzeigevorrichtung (4) und eine erste Bildaufnahmevorrichtung (3) aufweist, wobei die erste Bildaufnahmevorrichtung (3) angeordnet ist, zumindest einen die Augen umfassenden Bereich des Kopfes (20) eines ersten Nutzers (5) in einer Position aufzunehmen, bei welcher der erste Nutzer (5) die von der ersten Anzeigevorrichtung (4) wiedergegebenen ersten Videobilddaten betrachtet,
einer zweiten Videokonferenzeinrichtung (6), die entfernt von der ersten Videokonferenzeinrichtung (2) angeordnet ist, die datentechnisch mit der ersten Videokonferenzeinrichtung (2) gekoppelt ist und die eine zweite Anzeigevorrichtung (8) zur Wiedergabe von Videobilddaten aufweist, die von der ersten Bildaufnahmevorrichtung (3) aufgenommen werden,
eine Verarbeitungseinheit (14), welche mit der ersten Bildaufnahmevorrichtung (3) gekoppelt ist und welche ausgebildet ist, die von der ersten Bildaufnahmevorrichtung (3) aufgenommenen zweiten Videobilddaten zu empfangen und zu verarbeiten und die verarbeiteten zweiten Videobilddaten an die zweite Anzeigevorrichtung (8) der zweiten Videokonferenzeinrichtung (6) zu übertragen, wobei in den verarbeiteten zweiten Videobilddaten anhand einer Ziel-Blickrichtung und/oder einer Ziel-Pose eine Ausgabedarstellung des Kopfes mit einer Blickrichtung und/oder einer Pose so berechnet wird, dass die Blickrichtung und/oder Pose so erscheint,, als wäre die erste Bildaufnahmevorrichtung (3) auf einer Geraden (18) angeordnet, die durch einen ersten Umgebungsbereich der Augen des ersten Nutzers (5) und durch einen zweiten Umgebungsbereich der auf der ersten Anzeigevorrichtung (4) dargestellten Augen des zweiten Nutzers (9) geht,
**dadurch gekennzeichnet, dass**
die Verarbeitungseinheit (14) ausgebildet ist, bei der Verarbeitung der zweiten Videobilddaten folgende Schritte durchzuführen:
a. Erkennen des in den zweiten Videobilddaten dargestellten Kopfes des ersten Nutzers (5);
b. Verarbeiten der Darstellung des im Schritt a. erkannten Kopfes in einem Encoder (33) mittels eines trainierten künstlichen neuronalen Netzes, wobei durch die Verarbeitung:
b.1. Quell-Erscheinungsparameter des dargestellten Kopfes extrahiert werden, wobei die Quell-Erscheinungsparameter des Kopfes die Erscheinung des Kopfes spezifizieren,
b.2. ein Quell-Latenzvektor (zs) eines Latenzraums gewonnen wird, wobei der Quell-Latenzvektor zumindest die Pose des Kopfes und/oder die Blickrichtung (16) der Augen des Kopfes repräsentiert, und
b. 3. aus dem Quell-Latenzvektor (zs) und der Ziel-Blickrichtung und/oder der Ziel-Pose des Kopfes mit einer Blickrichtungs-Verarbeitungseinheit (41) ein Ziel-Latenzvektor (zt) des Latenzraums so berechnet wird, dass der Ziel-Latenzvektor zumindest die Ziel-Blickrichtung und/oder der Ziel-Pose des Kopfes repräsentiert,
c. Erzeugen einer Zwischendarstellung des im Schritt a. erkannten Kopfes mit der im Schritt b.3. gewonnenen Ziel-Pose und/oder mit der im Schritt b.3. gewonnenen Ziel-Blickrichtung in einem Decoder mittels eines Kopfmodells anhand des Ziel-Latenzvektors;
d. Verarbeiten der im Schritt c. erzeugten Zwischendarstellung des Kopfes von einer Warp-Einheit in dem Decoder zum Erzeugen der Ausgabedarstellung des Kopfes für die verarbeiteten zweiten Videobilddaten mittels des Quell-Latenzvektors, des Ziel-Latenzvektors und der Quell-Erscheinungsparameter.

14. Computerprogrammprodukt, umfassend Befehle, die bei der Ausführung des Programms durch einen Computer diesen veranlassen, ein Verfahren nach einem der Ansprüche 1 bis 12 auszuführen.
